# EUROPÄISCHE PATENTSCHRIFT

(11) **EP 4 097 996 B1**
(45) Veröffentlichungstag und Bekanntmachung des Hinweises auf die Patenterteilung: **18.10.2023**
(21) Anmeldenummer: 20703179.0
(22) Anmeldetag: 29.01.2020
(51) Int. Cl.: H04W 4/40

(54) **VERFAHREN ZUM AUSTAUSCHEN VON DATEN ZWISCHEN EINEM ANHÄNGER UND EINEM VERKEHRSTEILNEHMER, ANHÄNGER-KOMMUNIKATIONSMODUL SOWIE ANHÄNGER**
METHOD FOR EXCHANGING DATA BETWEEN A TRAILER AND A ROAD USER, TRAILER COMMUNICATION MODULE AND TRAILER
PROCÉDÉ D'ÉCHANGE DE DONNÉES ENTRE UNE REMORQUE ET UN USAGER DE LA ROUTE, MODULE DE COMMUNICATION DE REMORQUE ET REMORQUE

(43) Veröffentlichungstag der Anmeldung: 07.12.2022
(73) Patentinhaber: ZF CV Systems Global GmbH, 3006 Bern (CH)
(72) Erfinder: WERLE, Tobias, 30171 Hannover (DE)
(74) Vertreter: Schäferjohann, Volker
(86) Internationale Anmeldenummer: PCT/EP2020/052122
(87) Internationale Veröffentlichungsnummer: WO 2021/151479

(56) Entgegenhaltungen:
- CN-A- 110 406 519
- DE-A1-102017 220 585

## Beschreibung

Die Erfindung betrifft ein Verfahren zum Austauschen von Daten zwischen einem Anhänger und einem Verkehrsteilnehmer in einer Fahrzeugumgebung, ein Anhänger-Kommunikationsmodul sowie einen Anhänger.

Zum Koordinieren von Fahrzeugen in einem Platoon (Konvoi, Fahrzeugverbund) sind Kommunikationsmodule bekannt, mit denen eine drahtlose V2X-Datenverbindung aufgebaut werden kann, die einen Austausch von Daten gemäß dem V2X-Standard zwischen Fahrzeugen oder Infrastruktureinrichtungen ermöglicht. Meist sind diese Kommunikationsmodule dafür konzipiert, dass je Gesamtfahrzeug, bestehend aus einem Zugfahrzeug und ggf. einem Anhänger, ein derartiges Kommunikationsmodul verbaut ist. Werden innerhalb eines Gesamtfahrzeuges mehrere Kommunikationsmodule verbaut, kann dies zu inkonsistenten Daten führen. Die ausgetauschten Daten werden also unter Umständen unbrauchbar, da sie Widersprüche enthalten.

In DE 10 2017 201 717 A1 ist weiterführend ein Zugfahrzeug-Kommunikationsmodul beschrieben, das einen Datenaustausch gemäß dem V2X-Standard über eine drahtlose V2X-Datenverbindung zwischen zwei (Zug-) Fahrzeugen ermöglicht. Dies wird dazu verwendet, Zusatzinformationen vom nachfolgenden Fahrzeug zu erhalten, wenn das Zugfahrzeug einen großen Anhänger zieht, der die Sicht über die Spiegel auf das nachfolgende Fahrzeug versperrt. Der Anhänger selbst weist kein Kommunikationsmodul auf.

In DE 10 2015 011 320 A1 wird ein Datenaustausch gemäß dem V2X-Standard über eine drahtlose V2X-Datenverbindung zwischen einem Bus und einem sich nähernden Fahrzeug beschrieben, um ein gefahrloses Herausfahren aus einer Bushaltestelle zu ermöglichen.

DE10 2014 015 132 A1 beschreibt die Integration eines Telematikmoduls in ein elektronisches Bremssystem (EBS). In DE 11 2016 006 505 T5 ist beschrieben, dass ein Anhänger hinter dem Zugfahrzeug eine tote Zone für eine drahtlose Datenkommunikation gemäß dem V2X-Standard verursacht. Um dem zu begegnen, ist im Anhänger ein Anhänger-Kommunikationsmodul und im Zugfahrzeug ein Teilnehmer-Kommunikationsmodul angeordnet, die über ein erstes Kommunikationsprotokoll direkt miteinander kommunizieren können. Weiterhin kann das Anhänger-Kommunikationsmodul mit anderen Verkehrsteilnehmern in der Fahrzeugumgebung über ein zweites Kommunikationsprotokoll, das sich vom ersten Kommunikationsmodul unterscheidet, kommunizieren. Die Wahl des ersten Kommunikationsprotokolls ist dabei abhängig von der Wahl des zweiten Kommunikationsprotokolls, so dass der Betrieb des Anhänger-Kommunikationsmoduls immer abhängig von der drahtlosen Verbindung zum Zugfahrzeug ist. Das Anhänger-Kommunikationsmodul baut die V2X-Datenverbindung daher nicht eigenständig auf.

In DE 10 2018 117 526 A1 ist weiterhin ein Anhänger mit einem Anhänger-Kommunikationsmodul beschrieben, das über ein drahtloses Ökosystem aus Hochfrequenzvorrichtungen mit Verkehrsteilnehmern kommunizieren kann. Dabei werden Umgebungsinformationsdaten übertragen, um das Anfahren an den Anhänger, sowie das Rangieren damit zu erleichtern. Das Anhänger-Kommunikationsmodul arbeitet hier nicht eigenständig und kommuniziert nicht über eine standardisierte V2X-Verbindung mit den Verkehrsteilnehmern.

Aus der DE 10 2017 220 585 A1 ist ein Verbindungssystem zur Kopplung eines Fahrzeugs mit einem Anhänger bekannt. Damit ist es möglich eine auf V2X-basierende Kommunikationsvorrichtung bei Fahrzeugen nachzurüsten, welche über eine bestehende Anhängerkupplung verfügen.

Aus dem Dokument CN 110 406 519 A1 ist ein intelligentes Bremssystem für einen Anhänger auf der Basis von V2V-Kommunikation bekannt. Eine Anhängerelektronik-Steuereinheit dient zum Empfangen der Signale der Anhänger-V2V-Kommunikationseinheit und des 15-adrigen elektrischen Steckers und zum Senden eines entsprechenden Befehlssignals an das Anhänger-Motorhydrauliksystem.

Aufgabe der Erfindung ist, ein Verfahren zum Austauschen von Daten zwischen einem Anhänger und einem Verkehrsteilnehmer, ein Anhänger-Kommunikationsmodul sowie einen Anhänger anzugeben, die einen eigenständigen und standardisierten Betrieb des Anhängers ermöglichen.

Diese Aufgabe wird durch ein Verfahren, ein Anhänger-Kommunikationsmodul sowie einen Anhänger gemäß den unabhängigen Ansprüchen gelöst. Die Unteransprüche geben bevorzugte Weiterbildungen an.

Erfindungsgemäß ist demnach ein Verfahren zum Übertragen von Daten zwischen einem Anhänger und einem Verkehrsteilnehmer, beispielsweise einem Zugfahrzeug und/oder einem Zusatz-Anhänger oder einer Infrastruktureinrichtung oder einem Fremdfahrzeug, in einer Fahrzeugumgebung vorgesehen, wobei die Daten über eine drahtlose V2X-Datenverbindung zwischen einem Anhänger-Kommunikationsmodul des Anhängers und einem Teilnehmer-Kommunikationsmodul des Verkehrsteilnehmers gemäß einem V2X-Standard latenzarm, d.h. mit einer Latenzzeit von weniger als 200ms, vorzugsweise weniger als 100ms, insbesondere weniger als 50ms, übertragen werden,
wobei die drahtlose Datenverbindung direkt zwischen dem Anhänger-Kommunikationsmodul und dem jeweiligen Teilnehmer-Kommunikationsmodul ausgebildet wird oder indirekt über eine Verteilerstation, z.B. einen Funkmast, wobei die Verteilerstation die übertragenen Daten unmittelbar, d.h. ohne eine Veränderung der Daten, weiterleitet,
wobei das Anhänger-Kommunikationsmodul abhängig vom jeweiligen Verkehrsteilnehmer eigenständig einen Betriebsmodus auswählt und aktiviert, wobei in Abhängigkeit des aktivierten Betriebsmodus
   - den Anhänger betreffende Anhänger-Daten ausgewählt und gemäß dem V2X-Standard über die drahtlose V2X-Datenverbindung eigenständig ausgesendet werden, und/oder
   - von Verkehrsteilnehmern bereitgestellte und die Verkehrsteilnehmer betreffende Teilnehmer-Daten gemäß dem V2X-Standard empfangen und eigenständig verarbeitet werden.

Damit wird über ein eigenständiges und intelligentes Anhänger-Kommunikationsmodul eine latenzarme, flexible und eine von der Kommunikations-Infrastruktur unabhängigere Bereitstellung von Informationen eines Anhängers und/oder dessen Ladung über die drahtlose V2X-Datenverbindung ermöglicht. Demnach können die Informationen direkt bzw. unaufgefordert zwischen dem Anhänger und den Verkehrsteilnehmern übertragen werden. Darunter ist zu verstehen, dass die Daten ohne zwischenzeitliche Aufforderung, beispielsweise in der Verteilerstation oder vom jeweiligen Verkehrsteilnehmer, über die drahtlose V2X-Datenverbindung übertragen werden. Vielmehr entscheidet allein das Anhänger-Kommunikationsmodul ggf. in Abhängigkeit des Verkehrsteilnehmers, welche Daten ausgewählt und ausgesendet werden. Weiterhin kann auch vorgesehen sein, dass das Anhänger-Kommunikationsmodul die von Verkehrsteilnehmern empfangenen und die Verkehrsteilnehmer betreffenden Teilnehmer-Daten über die drahtlose V2X-Datenverbindung eigenständig wieder ausgibt. Das Anhänger-Kommunikationsmodul kann demnach auch eigenständig Daten verarbeitet oder unverarbeitet weiterleiten.

Das Anhänger-Kommunikationsmodul ist zudem aufgrund seiner Eigenständigkeit nicht auf die Infrastruktur von anderen Verkehrsteilnehmern, insbesondere einem Zugfahrzeug, abhängig. Die Informationen können daher einfacher verbreitet werden, wodurch die Verkehrssicherheit erhöht wird, ohne die Daten des Zugfahrzeuges in einen inkonsistenten Zustand zu versetzen, da das Anhänger-Kommunikationsmodul diese intelligent und eigenständig auswählen kann, insbesondere in Abhängigkeit des die Anhänger-Daten (potentiell) empfangenden Verkehrsteilnehmers. Die Anhänger-Daten können zudem direkt vom Ort des Geschehens unaufgefordert ausgewählt und ausgegeben werden, so dass keine Cloud bzw. kein zwischengeschalteter Server nötig sind, die die Anhänger-Daten verwalten und diese nur auf Abruf bzw. Aufforderung bereitstellen.

Zudem erfolgen die Ausgabe und das Verteilen der Informationen unabhängig von einer externen Software, die z.B. auf einem mit dem jeweiligen Teilnehmer-Kommunikationsmodul verbundenen Server des jeweiligen Verkehrsteilnehmers installiert ist. Ein Bereitstellen von Informationen erfolgt also nicht durch einen Zugriff oder eine Anfrage oder eine Anforderung an den Server, an den die Daten vorher gesendet wurden. Vielmehr erfolgt dies unaufgefordert und latenzarm direkt über die V2X-Datenverbindung.

Außerdem können Nachrichten mit geringer Latenz zwischen einem Anhänger und einem Zugfahrzeug oder einem anderen Verkehrsteilnehmer ausgetauscht werden, da auf eine standardisierte V2X-Verbindung zurückgriffen wird. Die niedrige Latenz dient ferner der Verkehrssicherheit, da eine empfangene Nachricht von einem vorrausfahrenden Fahrzeug, die eine Verzögerungsanforderung mit einem hohen Verzögerungswert enthält, in einer direkten Reaktion des Anhängers resultieren kann. Empfängt der Anhänger diese Nachricht, kann er bereits einen Bremsdruck anlegen, um schneller auf eine bevorstehende Bremsung reagieren zu können.

Weiterhin können über den V2X-Standard eine Vielzahl von Informationen übertragen werden, wobei die übertragenen Informationen auch individuell angepasst bzw. erweitert werden können. Diese Individualität fördert die Verfolgbarkeit von Anhängern und dessen Waren aber auch die Verkehrssicherheit. Da auf den V2X-Standard zurückgriffen wird, ist auch eine hohe Verfügbarkeit gegeben, da dieser V2X-Standard von einer Vielzahl an Fahrzeugen bzw. Verkehrsteilnehmern benutzt wird.

Vorzugsweise ist dabei vorgesehen, dass als drahtlose V2X-Datenverbindung
- eine Direkt-Datenverbindung, die direkt zwischen dem Anhänger und einem der Verkehrsteilnehmer ausgebildet ist, verwendet wird, wobei die Direkt-Datenverbindung eine kurzreichweitige DSRC-Datenverbindung oder eine 5G-Direkt-Verbindung ist, und/oder
- eine 5G-Mobil-Verbindung, die über eine Verteilerstation indirekt zwischen dem Anhänger und einem der Verkehrsteilnehmer ausgebildet wird, verwendet wird. Die Direkt-Datenverbindung liegt dabei vorzugsweise in einem Frequenzband zwischen 5.850 und 5.925 GHz und weist eine Verbindungs-Reichweite von bis zu 1000m auf.

Demnach kann auf drahtlose Verbindungen zurückgegriffen werden, die beispielsweise im Bereich des Platoonings bereits verwendet werden, so dass die Infrastruktur (Kommunikationsmodul) in einer Vielzahl an Fahrzeugen bereits vorhanden ist. Demnach sind lediglich die Intelligenz bzw. die Softwarealgorithmen der jeweiligen Kommunikationsmodule zu erweitern und auch der Anhänger als Teilfahrzeug mit einem derartigen Kommunikationsmodul auszustatten.

Vorzugsweise ist weiterhin vorgesehen, dass die Anhänger-Daten und die Teilnehmer-Daten in jeweils zugeordneten V2X-Datenpaketen gemäß dem V2X-Standard über die drahtlose Datenübertragung übertragen werden. Demnach können grundlegende Daten, beispielsweise eine globale Position, eine Ist-Geschwindigkeit, eine Fahrtrichtung, eine Ist-Beschleunigung, usw. in einem V2X-Primärdatenpaket übertragen werden und in einem V2X-Sekundärdatenpaket können weitere frei wählbare Informationen übertragen werden, beispielsweise eine Soll-Beschleunigung, Beladungs-Informationen, oder auch Umgebungs-Signale eines Umgebungserfassungssystems, o.ä. Dadurch kann auf eine standardisierte Kommunikation zurückgegriffen werden, die auch angepasst werden kann, was die Datenübertragung, insbesondere ausgehend vom Anhänger, flexibel macht.

Vorzugsweise ist weiterhin vorgesehen, dass das Anhänger-Kommunikationsmodul in einem Kopplungsmodus und/oder in einem Schnittstellenmodus betrieben wird, wenn das Anhänger-Kommunikationsmodul plausibel feststellt, dass der Anhänger mit mindestens einem dem Anhänger zugeordneten Zugfahrzeug und/oder mindestens einem dem Anhänger zugeordneten Zusatz-Anhänger gekoppelt ist. Dadurch können beispielsweise bei einem "Roadtrain", "Megaliner", "EuroCombi" Daten über den gesamten Zug mit geringer Latenzzeit intelligent verbreitet werden. Dabei kann in jedem der (Zusatz-)Anhänger ein erfindungsgemäßes Anhänger-Kommunikationsmodul vorgesehen sein, dass mit einer eigenen Intelligenz eigenständig Daten auswählen und aussenden und von anderen Verkehrsteilnehmern empfangen, auswerten und weiterleiten kann, so dass frühzeitig auf mögliche Warnungen reagiert werden kann, bevor beispielsweise eine Bremsanforderung von dem Zugfahrzeug bis an den letzten Anhänger durchgeleitet wurde.

Alternativ kann das Anhänger-Kommunikationsmodul in einem Freimodus betrieben werden, wenn das Anhänger-Kommunikationsmodul
- plausibel feststellt, dass der Anhänger mit keinem Zugfahrzeug und/oder keinem Zusatz-Anhänger gekoppelt ist, und/oder
- nicht plausibel feststellen kann, ob der Anhänger mit einem Zugfahrzeug und/oder mit keinem Zusatz-Anhänger gekoppelt ist. Das Anhänger-Kommunikationsmodul wählt somit eigenständig einen Betriebsmodus aus und aktiviert diesen, woraufhin entsprechend ausgewählte Daten über die drahtlose V2X-Datenverbindung übertragen werden. Dies dient hauptsächlich der Verkehrssicherheit, da andere Verkehrsteilnehmer unabhängig von einem Ankoppeln an ein Zugfahrzeug oder an einen Zusatz-Anhänger vor eventuellen Gefahren gewarnt und informiert werden sollen. Diese drahtlose Datenkommunikation wäre im Freimodus öffentlich zugänglich, d.h. ist vorzugsweise nicht verschlüsselt, da sie von möglichst vielen Verkehrsteilnehmern verstanden werden soll.

Vorzugsweise ist dabei vorgesehen, dass das Anhänger-Kommunikationsmodul den Kopplungsmodus und/oder den Schnittstellenmodus aktiviert, wenn anhand der von dem Zugfahrzeug über die drahtlose V2X-Datenverbindung ausgegebenen Zugfahrzeug-Daten, beispielsweise anhand einer globalen Zugfahrzeug-Position, und/oder anhand der von dem Zusatz-Anhänger über die drahtlose V2X-Datenverbindung ausgegebenen Zusatz-Anhänger-Daten und/oder anhand einer Kopplungs-Botschaft, plausibel festgestellt wird, dass der Anhänger an das mindestens eine Zugfahrzeug und/oder an den mindestens einen Zusatz-Anhänger gekoppelt ist. Diese Feststellung bzw. Plausibilisierung kann beispielsweise über einen bestimmten Zeitraum erfolgen. Eine derartige Beobachtung der Zugfahrzeug-Daten kann vom intelligenten Anhänger-Kommunikationsmodul eigenständig erfolgen, so dass der Aufwand für eine Wahl des Betriebsmodus gering gehalten werden kann.

Vorzugsweise ist dabei vorgesehen, dass das Anhänger-Kommunikationsmodul in dem Kopplungsmodus die Anhänger-Daten eigenständig auswählt und/oder anpasst und in die Fahrzeugumgebung zum Empfang durch andere Verkehrsteilnehmer ausgibt, wobei dazu auszugebende Anhänger-Daten mit den Zugfahrzeug-Daten und/oder den Zusatz-Anhänger-Daten abgeglichenen und/oder plausibilisiert werden und widersprüchliche Anhänger-Daten nicht übertragen werden. Das Anhänger-Kommunikationsmodul kann demnach selbständig eine gezielte Auswahl oder Anpassung von Daten vornehmen, die über die standardisierte V2X-Datenverbindung ausgegeben werden, ohne dabei die Datenverbindung des Zugfahrzeuges zu nutzen oder die Daten des Zugfahrzeuges und/oder des Zusatz-Anhängers anzupassen. Dennoch kann mit den angepassten Daten ein Überblick über das Gesamtfahrzeug gewonnen werden, ohne dass dabei Widersprüche bzw. Inkonsistenzen auftreten. Das Anhänger-Kommunikationsmodul kann dazu beispielsweise auch Anhänger-Daten zurückhalten, die nicht mit dem Zugfahrzeug-Daten und/oder den Zusatz-Anhänger-Daten übereinstimmen bzw. widersprüchlich dazu sind oder die ungenauer als diese sind.

Vorzugsweise ist weiterhin vorgesehen, dass in dem Schnittstellenmodus die Anhänger-Daten und/oder die Zugfahrzeug-Daten und/oder die Zusatz-Anhänger-Daten zwischen
- dem Anhänger und dem mindestens einen Zugfahrzeug und/oder
- zwischen dem Anhänger und dem mindestens einen Zusatz-Anhänger über die drahtlose V2X-Datenverbindung ausgetauscht werden. Demnach wird durch die drahtlose V2X-Datenverbindung eine zusätzliche Schnittstelle zwischen dem Zugfahrzeug und dem Anhänger geschaffen, die vorzugsweise verschlüsselt ist, da die darüber übertragenen Anhänger-Daten und/oder Zugfahrzeug-Daten und/oder Zusatz-Anhänger-Daten lediglich das Fahrzeug-Gespann bzw. den Zug betreffen, so dass die Datensicherheit gegenüber Daten, die auch öffentlich sind, durch eine Verschlüsselung zu erhöhen ist. Da eine Vielzahl von Daten über den V2X-Standard ausgetauscht werden können, sind vorteilhafterweise auch Daten übertragbar, die beispielsweise über eine kabelgebundenen standardisierte CAN-Schnittstelle nicht übertragen werden können.

Vorzugsweise ist dabei vorgesehen, dass im Schnittstellenmodus lediglich diejenigen Anhänger-Daten und/oder Zugfahrzeug-Daten und/oder Zusatz-Anhänger-Daten über die drahtlose V2X-Datenverbindung übertragen werden, die über eine standardisierte CAN-Schnittstelle zwischen
- dem mindestens einen Zugfahrzeug und dem Anhänger und/oder
- dem mindestens einen Zusatz-Anhänger und dem Anhänger nicht übertragen werden können, beispielsweise eine Zugfahrzeug-Soll-Beschleunigung und/oder eine Zugfahrzeug-Soll-Geschwindigkeit. Demnach kann die drahtlose V2X-Datenverbindung verwendet werden, um zusätzliche Informationen zu übertragen, die für einen sicheren Fahrbetrieb nötig sind. Eine Auswahl der zu berücksichtigenden Daten kann dabei vom Anhänger-Kommunikationsmodul getroffen werden, indem dieses die über die CAN-Schnittstelle übertragenen Daten überwacht und nur auf diejenigen drahtlos übertragenen Zugfahrzeug-Daten zurückgreift bzw. nur diejenigen Anhänger-Daten drahtlos ausgibt, die nicht über die CAN-Schnittstelle bereits kabelgebunden übertragen werden. Dadurch wird die Informationsdichte erhöht, ohne Daten doppelt bzw. redundant zu übertragen.

Gemäß einer bevorzugten Weiterbildung kann vorgesehen sein, dass das Anhänger-Kommunikationsmodul und/oder das Teilnehmer-Kommunikationsmodul in dem Schnittstellenmodus ermitteln, ob die CAN-Schnittstelle zwischen
- dem mindestens einen Zugfahrzeug und dem Anhänger und/oder
- dem mindestens einen Zusatz-Anhänger und dem Anhänger ausgefallen ist,
wobei bei einem CAN-Ausfall der CAN-Schnittstelle auch diejenigen Anhänger-Daten und/oder Zugfahrzeug-Daten und/oder Zusatz-Anhänger-Daten über die drahtlose V2X-Datenverbindung übertragen werden, die ohne einen CAN-Ausfall über die CAN-Schnittstelle übertragen werden. Dadurch kann die Informationsdichte gegenüber einer funktionierende CAN-Schnittstelle beibehalten werden, da die dann wegfallenden Daten, die sonst über die CAN-Schnittstelle übertragen werden, stattdessen über die drahtlose V2X-Datenverbindung übertragen werden können.

Vorzugsweise kann als alternative oder ergänzende Sicherheitsebene vorgesehen sein, dass das Anhänger-Kommunikationsmodul nach dem Aktivieren des Schnittstellenmodus und/oder des Kopplungsmodus prüft, ob das Teilnehmer-Kommunikationsmodul im Zugfahrzeug und/oder im Zusatz-Anhänger ausgefallen ist, wobei das Anhänger-Kommunikationsmodul bei einem Modul-Ausfall des jeweiligen Teilnehmer-Kommunikationsmoduls ein Ausfall-Warnsignal über die drahtlose V2X-Datenverbindung ausgibt und/oder die ausgegebenen Anhänger-Daten derartig auswählt, dass durch den Modul-Ausfall wegfallende Zugfahrzeug-Daten und/oder Zusatz-Anhänger-Daten ersetzt werden.

Vorteilhafterweise können also bei einer Erkennung eines Modul-Ausfalls im Zugfahrzeug und/oder in einem der Zusatz-Anhänger in den Anhänger-Daten insbesondere die Anhänger-Bewegungs-Informationen, z.B. eine globale Anhänger-Position und/oder eine Anhänger-Fahrtrichtung und/oder eine Anhänger-Ist-Beschleunigung und/oder eine Anhänger-Soll-Beschleunigung und/oder eine Anhänger-Ist-Geschwindigkeit und/oder eine Anhänger-Soll-Geschwindigkeit vom Anhänger-Kommunikationsmodul ausgegeben werden. Dies hat den Vorteil, dass der Anhänger über das Anhänger-Kommunikationsmodul die anderen Verkehrsteilnehmer darüber informieren kann, dass ein Modul-Ausfall vorliegt und stattdessen die Anhänger-Daten verwendet werden können. Beispielsweise könnte das Zugfahrzeug nach einem Modul-Ausfall ein Minimal-Risk-Manöver einleiten und auf den Standstreifen fahren. Das Anhänger-Kommunikationsmodul kann dies erkennen und z.B. die globale Anhänger-Position über die drahtlose V2X-Datenverbindung ausgeben, die von anderen Verkehrsteilnehmern empfangen werden kann.

Vorzugsweise ist weiterhin vorgesehen, dass das Anhänger-Kommunikationsmodul in einem Anfragemodus betrieben wird, wobei das Anhänger-Kommunikationsmodul in dem Anfragemodus Anfrage-Signale verarbeitet, wobei die Anfrage-Signale in den empfangenen Teilnehmerdaten von den jeweiligen Verkehrsteilnehmern enthalten sind, und das Anhänger-Kommunikationsmodul in Abhängigkeit der Anfrage-Signale Anhänger-Daten auswählt und aussendet. Demnach kann der Anhänger, ohne Zugfahrzeug oder mit angekoppeltem Zugfahrzeug, auf Anfrage gezielt Anhänger-Daten ausgeben, insofern diese verfügbar sind, um beispielsweise Informationen zur Beladung an einen Betriebshof oder weitere Infrastruktureinrichtungen oder Fahrzeuge über die drahtlose V2X-Datenverbindung auszugeben. Dies kann aufgrund der Eigenständigkeit des Anhänger-Kommunikationsmoduls unabhängig davon erfolgen, ob der Anhänger an ein Zugfahrzeug angekoppelt ist oder ob das Zugfahrzeug ein Teilnehmer-Kommunikationsmodul aufweist.

Vorzugsweise kann dabei vorgesehen sein, dass das Anhänger-Kommunikationsmodul lediglich dann Anhänger-Daten ermittelt und aussendet, wenn dem das Anfrage-Signal aussendenden Verkehrsteilnehmer vertraut wird. Dadurch wird die Datensicherheit erhöht, wobei die Anhänger-Daten dazu auf Anfrage ergänzend verschlüsselt übertragen werden können.

Vorzugsweise ist weiterhin vorgesehen, dass in den Anhänger-Daten im Anhänger ermittelte Anhänger-Bewegungs-Informationen und/oder Anhänger-Zusatz-Informationen übertragen werden, wobei
- die Anhänger-Bewegungs-Informationen eine globale Anhänger-Position und/oder eine Anhänger-Fahrtrichtung und/oder eine Anhänger-Ist-Beschleunigung und/oder eine Anhänger-Soll-Beschleunigung und/oder eine Anhänger-Ist-Geschwindigkeit und/oder eine Anhänger-Soll-Geschwindigkeit enthalten, und
- die Anhänger-Zusatz-Informationen eine Anhänger-Gefahren-Warnung und/oder eine Anhänger-Beladungs-Information und/oder einen Anhänger-Beladungs-Zustand und/oder Anhänger-Umgebungs-Signale enthalten. Die Anhänger-Daten werden demnach unabhängig von einem Verkehrsteilnehmer ermittelt und demnach auch nicht zwangsläufig aus übertragenen Teilnehmer-Daten erzeugt. Das Anhänger-Kommunikationsmodul ist damit grundsätzlich eigenständig nur im Anhänger betreibbar ohne auf einen anderen Verkehrsteilnehmer angewiesen zu sein. Lediglich dann, wenn sich der Anhänger im Kopplungsmodus oder Schnittstellenmodus befindet, können beispielsweise Informationen vom Zugfahrzeug oder vom Zusatz-Anhänger hinzugezogen werden.

Analog dazu ist vorgesehen, dass in den Teilnehmer-Daten Teilnehmer-Bewegungs-Informationen und/oder Teilnehmer-Zusatz-Informationen übertragen werden, wobei die
- die Teilnehmer-Bewegungs-Informationen eine globale Teilnehmer-Position und/oder eine Teilnehmer-Fahrtrichtung und/oder eine Teilnehmer-Ist-Beschleunigung und/oder eine Teilnehmer-Soll-Beschleunigung und/oder eine Teilnehmer-Ist-Geschwindigkeit und/oder eine Teilnehmer-Soll-Geschwindigkeit enthalten, und
- die Teilnehmer-Zusatz-Informationen eine Teilnehmer-Gefahren-Warnung und/oder eine Teilnehmer-Beladungs-Information und/oder einen Teilnehmer-Beladungs-Zustand und/oder Teilnehmer-Umgebungs-Signale enthalten.

Damit kann das Anhänger-Kommunikationsmodul über die Anhänger- bzw. die Teilnehmer-Daten eine Vielzahl von Informationen verarbeiten und entsprechend eigenständig in der Fahrzeugumgebung agieren bzw. reagieren.

Vorzugsweise ist weiterhin vorgesehen, dass die Bewegungs-Informationen von einer Sensorik, beispielsweise einem GNSS-Sensor, insbesondere GPS-Sensor, und/oder Raddrehzahlsensoren und/oder Beschleunigungssensoren, die eine Ist-Beschleunigung in eine x-Richtung und/oder y-Richtung und/oder z-Richtung messen können, und/oder Geschwindigkeitssensoren am Anhänger und/oder an dem jeweiligen Verkehrsteilnehmer ermittelt werden,
wobei die Bewegungs-Informationen über ein Bussystem, beispielsweise einen CAN-Bus, von der Sensorik an das Anhänger-Kommunikationsmodul übertragen werden, oder die Sensorik zumindest teilweise im Anhänger-Kommunikationsmodul angeordnet ist. Dies ermöglicht einen einfachen Zugriff auf die jeweiligen Bewegungs-Informationen, wobei nicht zwangsläufig weitere Sensoren zu verbauen sind, da diese im Anhänger bzw. im jeweiligen Verkehrsteilnehmer unter Umständen bereits vorhanden sind, beispielsweise ein GNSS-Sensor.

Vorzugsweise ist weiterhin vorgesehen, dass der Beladungs-Zustand über einen Temperatur-Sensor im Laderaum und/oder eine Laderaumkamera im Laderaum des Anhängers oder des Verkehrsteilnehmers erfasst wird. Dadurch kann in einfacher Weise eine Information über den Zustand der Beladung eingelesen und übermittelt werden.

Vorzugsweise ist weiterhin vorgesehen, dass das Anhänger-Kommunikationsmodul im Anhänger unabhängig von den Verkehrsteilnehmern mit Energie versorgt wird. Demnach kann beispielsweise eine eigene Energieversorgung bzw. Energiequelle für das Anhänger-Kommunikationsmodul vorgesehen sein, die zumindest unabhängig vom Zugfahrzeug und beispielsweise auch unabhängig von weiteren Komponenten im Anhänger ist. Dadurch kann das Anhänger-Kommunikationsmodul vollkommen eigenständig agieren.

Vorzugsweise ist weiterhin vorgesehen, dass die Anhänger-Daten und/oder Teilnehmer-Daten verschlüsselt über die drahtlose V2X-Datenverbindung übertragen werden. Dadurch kann die Datensicherheit weiter erhöht werden. Dies ist insbesondere im Schnittstellenmodus vorteilhaft, da die Übertragung der Daten in dem Fall lediglich zwischen dem Zugfahrzeug und dem Anhänger bzw. dem Zusatz-Anhänger stattfinden soll.

Vorzugsweise ist weiterhin vorgesehen, dass das Anhänger-Kommunikationsmodul die Anhänger-Daten erst dann aussendet, wenn ein Verkehrsteilnehmer mit einem Teilnehmer-Kommunikationsmodul in Verbindungs-Reichweite zum Anhänger-Kommunikationsmodul ist. Demnach werden nicht ständig Anhänger-Daten ausgesendet, wodurch der Verarbeitungsaufwand und Energie gespart werden können. Zudem wird die Datensicherheit erhöht.

Weiterhin sind erfindungsgemäß ein Anhänger-Kommunikationsmodul zur Durchführung des erfindungsgemäßen Verfahrens sowie ein Anhänger mit einem Anhänger-Kommunikationsmodul vorgesehen, wobei das Anhänger-Kommunikationsmodul eigenständig oder Bestandteil eines elektronischen Anhänger-Bremssystems ist. Damit ist dies einfach nachrüstbar.

Die Erfindung wird im Folgenden anhand eines Ausführungsbeispiels näher erläutert. Es zeigen:
- Fig. 1: eine schematische Ansicht eines Anhängers in einer Fahrzeugumgebung;
- Fig. 2: eine schematische Ansicht eines Fahrzeug-Gespanns; und
- Fig. 3: ein Flussdiagramm des erfindungsgemäßen Verfahrens.

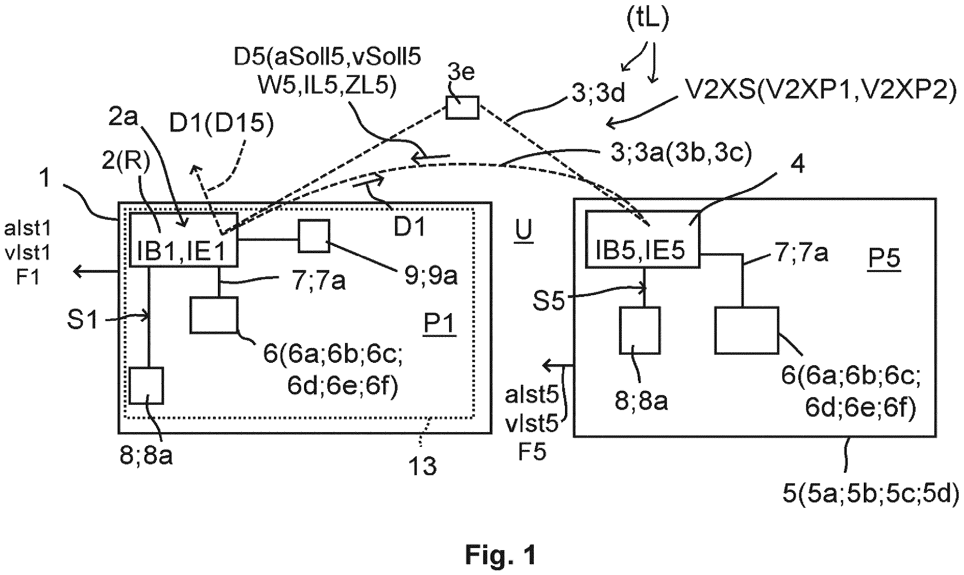

In Figur 1 ist ein Anhänger 1 dargestellt, der sich in einer Fahrzeugumgebung U befindet. Der Anhänger 1 weist ein Anhänger-Kommunikationsmodul 2 auf, das ausgebildet ist, eine latenzarme drahtlose V2X-Datenverbindung 3 zu einem Teilnehmer-Kommunikationsmodul 4 in der Fahrzeugumgebung U herzustellen. Das Teilnehmer-Kommunikationsmodul 4 befindet sich dabei in einem Verkehrsteilnehmer 5 in der Fahrzeugumgebung U, beispielsweise in einem dem Anhänger 1 zugeordneten Zugfahrzeug 5a, in einer Infrastruktureinrichtung 5b oder in einem Fremdfahrzeug 5c, das nicht dem Anhänger 1 zugeordnet ist. Weiterhin kann sich ein Teilnehmer-Kommunikationsmodul 4 in einem dem Anhänger 1 zugeordneten Zusatz-Anhänger 5d befinden, wenn beispielsweise ein "Roadtrain", "Megaliner", "EuroCombi" vorliegt.

Die drahtlose V2X-Datenverbindung 3 ist vorzugsweise eine Direkt-Datenverbindung 3a, die direkt zwischen dem Anhänger 1 und dem jeweiligen Verkehrsteilnehmer 5 ausgebildet wird, beispielsweise eine kurzreichweitige DSRC-Datenverbindung 3b (Dedicated Short Range Communication) oder eine 5G-Direkt-Verbindung 3c über den Mobilfunkstandard 5G. Derartige Direkt-Datenverbindungen 3a werden beispielsweise für eine standardisierte V2X-Kommunikation (V2X, vehicle-to-everything) zwischen zwei Fahrzeugen (V2V) oder zwischen einem Fahrzeug und einer Infrastruktureinrichtung (V2I), beispielsweise im Rahmen einer abgestimmten Fahrt in einem Platoon verwendet. Als DSRC-Datenverbindung 3b können beispielsweise ETSI (C-) ITS ((Cooperative) Intelligent Transport System) und/oder DSRC WAVE oder weitere bekannte und standardisierte Methoden verwendet werden. Bei dieser DSRC-Datenverbindung 3b und auch der 5G-Direkt-Verbindung 3c kann ein Frequenzband von vorzugsweise 5.9GHz, insbesondere 5.850-5.925 GHz, verwendet werden. Diese haben eine Verbindungs-Reichweite R von bis zu 1000 m.

Die drahtlosen V2X-Datenverbindungen 3 nutzen vorzugsweise einen V2X-Standard V2XS, um Informationen bzw. Nachrichten drahtlos zu übertragen. Gemäß diesem V2X-Standard V2XS werden in einem V2X-Primärdatenpaket V2XP1 in regelmäßigen Zeitabständen beispielsweise eine globale Position P1, P5, eine Ist-Geschwindigkeit vlst1, vlst5, eine Fahrtrichtung F1, F5, eine Ist-Beschleunigung alst1, alst5, usw. übertragen. In einem V2X-Sekundärdatenpaket V2XP2 können weitere frei wählbare Informationen übertragen werden, beispielsweise eine Soll-Beschleunigung aSoll1, aSoll5, Beladungs-Informationen IL1, IL5, o.ä.

Alternativ oder ergänzend ist auch eine 5G-Mobil-Verbindung 3d über den Mobilfunkstandard 5G über eine zusätzliche Verteilerstation 3e möglich. Die Verteilerstation 3e dient dabei lediglich der Erweiterung der Reichweite, d.h. in der Verteilerstation 3e findet keine intelligente Verarbeitung der Daten D1, D5 statt. Die Daten D1, D5 werden demnach im Wesentlichen lediglich weitergeleitet, ohne dass dabei eine aktive Aufforderung entgegenzunehmen ist, d.h. die Weiterleitung erfolgt unaufgefordert. Demnach wird keine direkte Verbindung zwischen den Verkehrsteilnehmern 5 ausgebildet. Auch hier wird aber vorzugsweise ein V2X-Standard V2XS zur Übertragung von Informationen bzw. Nachrichten genutzt.

Aufgrund der Nutzung der jeweiligen V2X-Datenverbindung 3; 3a; 3d gemäß dem V2X-Standard V2XS kann eine geringe Latenzzeit tL von weniger als 200ms, vorzugsweise weniger als 100ms, insbesondere weniger als 50ms erreicht werden, so dass der Datenaustausch D1, D5 sehr schnell erfolgt.

Das Anhänger-Kommunikationsmodul 2 ist ebenso wie das Teilnehmer-Kommunikationsmodul 4 ausgebildet, über die drahtlose V2X-Datenverbindung 3 Anhänger-Daten D1 zu senden und Teilnehmer-Daten D5 zu empfangen, vorzugsweise gemäß dem V2X-Standard V2XS. Die jeweiligen Daten D1, D5 können beispielsweise Anhänger-Bewegungs-Informationen IB1 bzw. Teilnehmer-Bewegungs-Informationen IB5 des jeweiligen Verkehrsteilnehmers 5 enthalten. Als Bewegungs-Informationen IB1, IB5 kommen beispielsweise eine globale Position P1, P5, eine Fahrtrichtung F1, F5, eine Ist-Beschleunigung alst1, alst5, eine Soll-Beschleunigung aSoll1, aSoll5, eine Ist-Geschwindigkeit vlst1, vlst5, eine Soll-Geschwindigkeit vSoll1, vSoll5, etc. des Anhängers 1 bzw. des jeweiligen Verkehrsteilnehmers 5 in Frage, wobei diese über das jeweilige V2X-Datenpaket V2XP1, V2XP2 übertragen werden. Die Indizes "1" und "5" beziehen sich dabei auf den Anhänger 1 bzw. den jeweiligen Verkehrsteilnehmer 5, wobei die Bewegungs-Informationen IB5 des jeweiligen Verkehrsteilnehmers 5 nur übermittelt werden, insofern diese für den jeweiligen Verkehrsteilnehmer 5 zutreffend sind.

Die Bewegungs-Informationen IB1, IB5 können von einer entsprechenden Sensorik 6, beispielsweise einem GNSS-Sensor 6a (GNSS, Global Navigation Satellite System), insbesondere GPS (Global Positioning System), und/oder Raddrehzahlsensoren 6b an den Rädern und/oder Beschleunigungssensoren 6c, die eine Ist-Beschleunigung alst1, alst5 in eine x-Richtung und/oder y-Richtung und/oder z-Richtung messen können, und damit insbesondere auch ein Kippen des Anhängers 5, und/oder Geschwindigkeitssensoren 6d, etc. im Anhänger 1 bzw. am jeweiligen Verkehrsteilnehmer 5 ermittelt werden, wobei die Sensorik 6 mit dem jeweiligen Kommunikationsmodul 2, 4 mittelbar oder unmittelbar signalleitend verbunden ist oder in diesem enthalten ist.

Aus den globalen Positionen P1, P5 allein lassen sich dabei bereits eine Vielzahl an Bewegungs-Informationen IB1, IB5 ableiten, beispielsweise die Ist-Geschwindigkeit v!st1, vlst5 oder die Ist-Beschleunigung alst1, alst5 oder die Fahrtrichtung F1, F5. Die Bewegungs-Informationen IB1, IB5 können im Anhänger 1, im Zugfahrzeug 5a, im Zusatz-Anhänger 5d und im Fremdfahrzeug 5c beispielsweise auch über ein Bussystem 7, beispielsweise einen CAN-Bus 7a, übertragen werden, so dass auf die ggf. bereits vorhandene Sensorik 6 im Anhänger 1 bzw. im jeweiligen Verkehrsteilnehmer 5 zurückgegriffen werden kann.

Weiterhin können die jeweiligen Daten D1, D5 auch Zusatz-Informationen IE1, IE5, beispielsweise eine Anhänger-Gefahren-Warnung W1, eine Teilnehmer-Gefahren-Warnung W5, eine Anhänger-Beladungs-Information IL1, eine Teilnehmer-Beladungs-Information IL5, einen Anhänger-Beladungs-Zustand ZL1, einen Teilnehmer-Beladungs-Zustand ZL5 oder Umgebungs-Signale S1, S5 eines Umgebungserfassungssystems 8, beispielsweise einer Umgebungskamera 8a, eines Radar-Sensors 8b, eines LIDAR-Sensors 8c, eines Ultraschall-Sensors 8d, etc., am Anhänger 1 und/oder am jeweiligen Verkehrsteilnehmer 5 enthalten, insofern verfügbar. Diese können z.B. über das V2X-Sekundärdatenpaket V2XP2 übertragen werden.

Die Beladungs-Informationen IL1, IL5 können hierbei Informationen über die Beladung beinhalten, beispielsweise Tiere, kalte Gase, Gefahrenstoffe, Leerfahrt, etc.. Diese können manuell vom Fahrer oder automatisiert zur Verfügung gestellt werden. Der Beladungs-Zustand ZL1, ZL5 gibt einen Zustand der Beladung an, beispielsweise eine Temperatur oder eine Anordnung der Beladung, d.h. ob diese beispielsweise umgekippt, ausgelaufen ist, etc. Dies kann beispielsweise über einen Temperatur-Sensor 6e im Laderaum oder eine Laderaumkamera 6f, etc. als zusätzliche Sensorik 6 im Anhänger 5 oder im entsprechenden Verkehrsteilnehmer 5 erfasst werden. Eine Gefahren-Warnung W1, W5 kann beispielsweise bewegungskritische Fahrsituationen des Anhängers 1 oder des jeweiligen Verkehrsteilnehmers 5, die die Fahrdynamik betreffen, beispielsweise eine starke (Not-)Bremsung oder ein drohendes Umkippen, oder kritische Zustände der Beladung, beispielsweise eine auslaufende Flüssigkeit, etc. beinhalten.

Das Anhänger-Kommunikationsmodul 2 ist demnach in der Lage, Anhänger-Bewegungs-Informationen IB1 sowie Anhänger-Zusatz-Informationen IE1 zu erhalten, selbständig zu verarbeiten und entsprechend über die drahtlose V2X-Datenverbindung 3 als Anhänger-Daten D1 gemäß dem V2X-Standard V2XS selbständig auszusenden und damit in der Fahrzeugumgebung U bereitzustellen. Die anderen Verkehrsteilnehmer 5 in der Fahrzeugumgebung U, d.h. entweder alle Verkehrsteilnehmer 5 oder ein festgelegter Teilnehmerkreis, können diese Anhänger-Daten D1 mit ihren Teilnehmer-Kommunikationsmodulen 4 empfangen und entsprechend auswerten bzw. darauf reagieren. In identischer Weise kann auch das Anhänger-Kommunikationsmodul 2 empfangene Teilnehmer-Daten D5 gemäß dem V2X-Standard V2XS auswerten und darauf reagieren.

Hierbei ist der Anhänger 1 selbst nicht darauf angewiesen, mit einem Zugfahrzeug 5a gekoppelt zu sein. Das Anhänger-Kommunikationsmodul 2 arbeitet also quasi autark bzw. autonom und kann unabhängig vom Zugfahrzeug 5a mit den jeweiligen Verkehrsteilnehmern 5 in der Fahrzeugumgebung U kommunizieren, sendet also seine Anhänger-Daten D1 gemäß dem V2X-Standard V2XS nicht nur zum Zugfahrzeug 5a und über dieses zu den anderen Verkehrsteilnehmern 5. Damit ist das Anhänger-Kommunikationsmodul 2 unabhängig und intelligent ausgeführt, da es eigenständig agieren und/oder reagieren kann. Dazu kann das Anhänger-Kommunikationsmodul 2 in unterschiedlichen Betriebsmodi BM betrieben werden, in denen es nicht zwangsläufig nur auf externe Anforderungen reagiert, sondern auch unabhängig davon agieren kann. Dies gilt im Übrigen auch für jeden Zusatz-Anhänger 5d, dessen Teilnehmer-Kommunikationsmodul 4 eine gleichwertige Intelligenz aufweisen kann bzw. identisch zum Anhänger-Kommunikationsmodul 2 ausgestaltet sein kann.

Die drahtlose V2X-Datenverbindung 3, insbesondere die kurzreichweitige Direkt-Datenverbindung 3a (DSRC 3b, 5G-Direkt 3c), kann also als eine Art T2X-Datenverbindung (trailer-to-everything: T2T (trailer-to-trailer), T2V (trailer-to-vehicle), T2I (trailer-to-infrastructure) bezeichnet werden, die einen unabhängigen und intelligenten Datenaustausch in standardisierter Form bzw. gemäß dem V2X-Standard V2XS ermöglicht. Dies hat vor allem den Vorteil, dass die drahtlose V2X-Datenverbindung 3 auch funktioniert, wenn das zugeordnete Zugfahrzeug 5a nicht mit entsprechender Technik zur drahtlosen Datenübertragung ausgestattet ist oder das Zugfahrzeug 5a gerade nicht angekoppelt ist. Dies macht die Lösung herstellerunabhängig und flexibel.

Die Energieversorgung des Anhänger-Kommunikationsmoduls 2 erfolgt durch eine vom Zugfahrzeug 5a unabhängige Energiequelle 9, beispielsweise eine Batterie 9a, die im Anhänger 1 angeordnet ist und die auch ohne ein angekoppeltes Zugfahrzeug 5a Energie liefern kann. Die Energiequelle 9 kann aber über ein angekoppeltes Zugfahrzeug 5a geladen werden oder aber durch Solarpaneele auf dem Dach oder durch Rekuperationseinheiten am Anhänger 1 oder weitere bekannte Auflademethoden.

Damit kann der Anhänger 1 (und ggf. auch jeder Zusatz-Anhänger 5d) als eigenständiges "Fahrzeug" im drahtlosen Netzwerk, das durch die jeweilige drahtlose V2X-Datenverbindung 3 ausgebildet wird, gemäß dem V2X-Standard V2XS kommunizieren und ist dabei nicht auf ein Zugfahrzeug 5a, das als Energiequelle oder als Recheneinheit oder als Master dient, angewiesen. Damit wird also eine neue offene und standardisierte Schnittstelle vom Anhänger 1 (und ggf. auch von jedem Zusatz-Anhänger 5d) nach außen geschaffen, um unabhängig agieren und reagieren zu können.

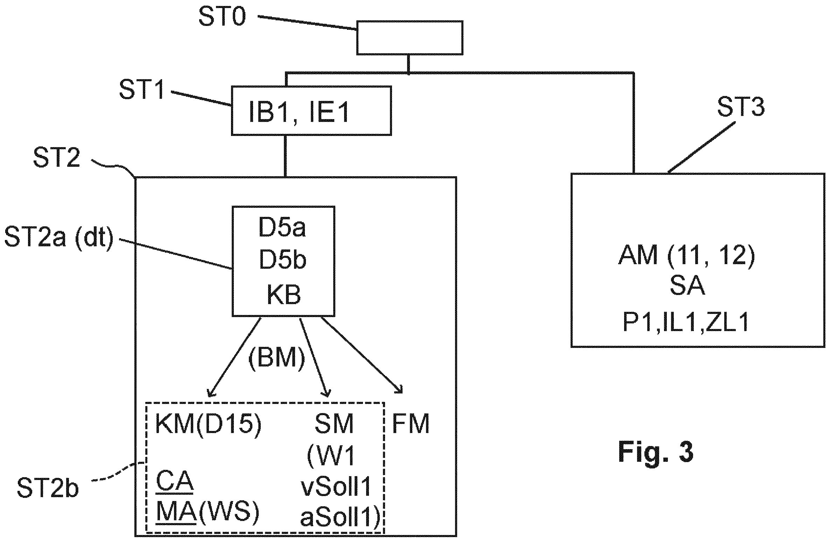

Damit lassen sich in einem Verfahren gemäß Fig. 3 nach einem anfänglichen Initialisierungs-Schritt ST0 zunächst die oben beschriebenen Anhänger-Bewegungs-Informationen IB1 und/oder die Anhänger-Zusatz-Informationen IE1 in das Anhänger-Kommunikationsmodul 2 einlesen bzw. darin erzeugen und auswählen (ST1). Die Anhänger-Bewegungs-Informationen IB1 und/oder die Anhänger-Zusatz-Informationen IE1 werden dabei vorrangig im Anhänger 1 erzeugt, d.h. unabhängig vom Vorhandensein eines Zugfahrzeuges 5a oder eines anderen Verkehrsteilnehmers 5.

Anschließend können diese ausgewählten Anhänger-Bewegungs-Informationen IB1 und/oder die ausgewählten Anhänger-Zusatz-Informationen IE1 in einem zweiten Schritt ST2 über die drahtlose V2X-Datenverbindung 3 als Anhänger-Daten D1 gemäß dem V2X-Standard V2XS in den jeweiligen V2X-Datenpaketen V2XP1, V2XP2 ausgesendet werden. Die drahtlose Übertragung der Anhänger-Daten D1 bzw. auch schon die Auswahl der auszugebenden Anhänger-Daten D1 wird dabei in Abhängigkeit eines eigenständig eingestellten Betriebsmodus BM veranlasst. Das Anhänger-Kommunikationsmodul 2 veranlasst daher eigenständig und ohne Aufforderung vom jeweiligen Verkehrsteilnehmer 5, der die Anhänger-Daten D1 empfängt, welche Anhänger-Daten D1 tatsächlich ausgesendet werden.

Das Anhänger-Kommunikationsmodul 2 weist also eine Intelligenz bzw. einen Algorithmus 2a auf, die es ermöglichen, eigenständig einen Betriebsmodus BM auszuwählen und zu aktivieren und in Abhängigkeit davon ausgewählte Anhänger-Daten D1 auszugeben. Parallel dazu können vom Anhänger-Kommunikationsmodul 2 in Abhängigkeit eines eigenständig ausgewählten und aktivierten Betriebsmodus BM auch Teilnehmer-Daten D5 über die drahtlose V2X-Datenverbindung 3 empfangen und eigenständig verarbeitet werden (ST3).

Der Betrieb des Anhänger-Kommunikationsmoduls 2 ist dabei vollkommen unabhängig von einem Vorhandensein eines Zugfahrzeuges 5a, z.B. wenn der Anhänger 1 auf einem Betriebshof abgestellt ist, und auch unabhängig von der von dem Zugfahrzeug 5a verwendeten drahtlosen V2X-Datenverbindung 3 bzw. des darin verwendeten Teilnehmer-Kommunikationsmoduls 4, insofern diese darin überhaupt existieren. Damit ist das Anhänger-Kommunikationsmodul 2 autark und intelligent ausgebildet, da es eigenständig agieren und reagieren kann. Hierdurch wird es möglich, dass Zugfahrzeuge 5a und/oder Zusatz-Anhänger 5d, die dem Anhänger 1 zugeordnet sind und ein solches Teilnehmer-Kommunikationsmodul 4 nicht aufweisen, von der Intelligenz des Anhängers 1 bzw. des Anhänger-Kommunikationsmoduls 2 profitieren, da nach dem Ankoppeln des Anhängers 1 an ein solches Zugfahrzeug 5a bzw. einen solchen Zusatz-Anhänger 5d das Gesamtfahrzeug über eine solche intelligente Einheit, das Anhänger-Kommunikationsmodul 2, verfügt.

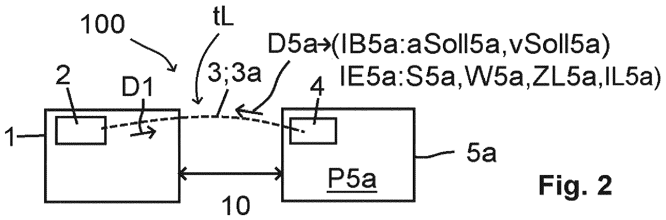

Das intelligente Anhänger-Kommunikationsmodul 2 ist beispielsweise ausgebildet, die auszusendenden Anhänger-Daten D1 selbständig anzupassen, wenn ein angekoppeltes Zugfahrzeug 5a und/oder Zusatz-Anhänger 5d, in dem oder denen ein Teilnehmer-Kommunikationsmodul 4 angeordnet ist, das entsprechende Zugfahrzeug-Daten D5a bzw. Zusatz-Anhänger-Daten D5d aussendet, vorliegt (s. Fig. 2).

Normalerweise sendet ein Zugfahrzeug 5a bzw. ein Zusatz-Anhänger 5d über eine hier verwendete drahtlose V2X-Datenverbindung 3, insbesondere Direkt-Datenverbindung 3a, Zugfahrzeug-Daten D5a bzw. Zusatz-Anhänger-Daten D5d gemäß dem V2X-Standard V2XS aus, die zumindest teilweise auch das gesamte Fahrzeug-Gespann 100 aus Zugfahrzeug 5a und dem mindestens einen angekoppelten Anhänger 1 bzw. Zusatz-Anhänger 5d betreffen. Dies folgt daraus, dass eine Differenzierung zwischen dem Zugfahrzeug 5a und dem oder den angekoppelten Anhänger(n) 1, 5d oft nicht möglich ist, beispielsweise für die Ist-Beschleunigung oder die Ist-Geschwindigkeit des gesamten Fahrzeug-Gespanns 100. Dem Zugfahrzeug 5a liegen zudem nicht immer detaillierte Informationen vom Anhänger 1 bzw. vom Zusatz-Anhänger 5d vor.

Das Anhänger-Kommunikationsmodul 2 ist ausgehend davon in der Lage, in einem Erkennungsschritt ST2a ein Teilnehmer-Kommunikationsmodul 4 in dem dem Anhänger 1 zugeordneten Zugfahrzeug 5a und/oder Zusatz-Anhänger 5d plausibel zu erkennen, beispielsweise anhand der vom Zugfahrzeug 5a über einen vorgegebenen Zeitraum dt ausgegebenen Zugfahrzeug-Daten D5a bzw. anhand der vom Zusatz-Anhänger 5d über einen vorgegebenen Zeitraum dt ausgegebenen Zusatz-Anhänger-Daten D5d. Die Zugfahrzeug-Daten D5a bzw. Zusatz-Anhänger-Daten D5d können dabei auch eine Kopplungs-Botschaft KB, z.B. im V2X-Sekundärdatenpaket V2XP2, enthalten, die Informationen zur beiderseitigen Kopplung angeben und zur Plausibilisierung herangezogen werden können.

Wird diese aktive Kopplung vom Anhänger-Kommunikationsmodul 2 erkannt, wird das Anhänger-Kommunikationsmodul 2 in einen Kopplungsmodus KM (Betriebsmodus BM) geschaltet, in dem die Anhänger-Daten D1 ausgewählt bzw. angepasst werden. Das Anhänger-Kommunikationsmodul 2 gibt dabei unter Umständen nicht mehr die gesamten verfügbaren Informationen als Anhänger-Daten D1 gemäß dem V2X-Standard V2XS über die drahtlose V2X-Datenverbindung 3 aus, sondern lediglich Kopplungs-Daten D15. Parallel dazu sendet das Zugfahrzeug 5a weiterhin Zugfahrzeug-Daten D5a bzw. der Zusatz-Anhänger 5d weiterhin Zusatz-Anhänger-Daten D5d aus.

Die Kopplungs-Daten D15 enthalten dabei die Anhänger-Daten D1, die mit den Zugfahrzeug-Daten D5a bzw. den Zusatz-Anhänger-Daten D5d abgeglichen bzw. plausibilisiert wurden. Das Anhänger-Kommunikationsmodul 2 entscheidet dabei anhand der empfangenen Zugfahrzeug-Daten D5a bzw. Zusatz-Anhänger-Daten D5d, ob beispielsweise die Anhänger-Ist-Geschwindigkeit vlst1 und/oder die Anhänger-Ist-Beschleunigung alst1 und/oder die Anhänger-Soll-Beschleunigung aSoll1 und/oder die Anhänger-Soll-Geschwindigkeit vSoll1 mit den entsprechend übertragenen Zugfahrzeug-Bewegungs-Informationen IB5a übereinstimmen bzw. diese bestätigen oder die jeweiligen Anhänger-Daten D1 genauer sind. Ist dies nicht der Fall, werden die jeweiligen Anhänger-Bewegungs-Informationen IB1 nicht als Kopplungs-Daten D15 übertragen, bzw. nur jene, für die keine Widersprüche mit den Zugfahrzeug-Bewegungs-Informationen IB5a bestehen. Analog gilt dies für die Zusatz-Anhänger-Daten D5d, die entsprechend plausibilisiert werden können.

Da das Zugfahrzeug 5a beispielsweise nicht in jeder Situation Zugriff auf aktuelle Anhänger-Bewegungs-Informationen IB1 und/oder Anhänger-Zusatz-Informationen IE1 hat, können in den Kopplungs-Daten D15 ergänzend anhängerspezifische Informationen, für die sich kein Widerspruch mit den zugfahrzeugspezifischen Informationen ergibt, übertragen werden. Aus den Kopplungs-Daten D15 kann also zusammen mit den Zugfahrzeug-Daten D5a und/oder den Zusatz-Anhänger-Daten D5d ein tatsächliches Gesamtbild der aktuellen Fahrsituation des Fahrzeug-Gespanns 100 hergeleitet werden.

Verfügt ein Zugfahrzeug 5a und/oder ein Zusatz-Fahrzeug 5d über ein Teilnehmer-Kommunikationsmodul 4, wird dies dem Anhänger-Kommunikationsmodul 2, wie beschrieben, durch eine Plausibilisierung der Zugfahrzeug-Daten D5a bzw. der Zusatz-Anhänger-Daten D5d über den Zeitraum dt oder über die in den Zugfahrzeug-Daten D5a bzw. den Zusatz-Anhänger-Daten D5d enthaltenen Kopplungs-Botschaft KB mitgeteilt (vgl. Erkennungsschritt ST2a). Dadurch kann das intelligente Anhänger-Kommunikationsmodul 2 ergänzend in einem Schnittstellenmodus SM (Betriebsmodus BM) betrieben werden, in dem die normalerweise vorhandene CAN-Schnittstelle 10 zwischen dem Anhänger 1 und dem diesem zugeordneten Zugfahrzeug 5a bzw. dem diesem zugeordneten Zusatz-Anhänger 5d erweitert wird.

Die CAN-Schnittstelle 10 ist normalerweise standardisiert, so dass der Informationsaustausch darüber begrenzt und eine Erweiterung nicht möglich ist. In dem Schnittstellenmodus SM kann jedoch parallel zur CAN-Schnittstelle 10 die drahtlose V2X-Datenverbindung 3 zwischen dem Anhänger 1 und dem Zugfahrzeug 5a bzw. dem Zusatz-Anhänger 5d verwendet werden, um Daten D1, D5a, D5d auszutauschen, die sonst über die CAN-Schnittstelle 10 nicht ausgetauscht werden können. Dieser parallele Weg ist dabei ebenfalls latenzarm und standardisiert, gemäß dem V2X-Standard V2XS, wobei in dem Fall aber über die V2X-Datenpakete V2XP1, V2XP2 auch zusätzliche Informationen übertragen werden können. Gegenüber der CAN-Schnittstelle 10 ist die V2X-Schnittstelle nämlich erweiterbar. Anhand der übertragenen Daten D1, D5a, D5d kann das Anhänger-Kommunikationsmodul 2 dann eigenständig agieren.

Bei den ausgetauschten Daten D1, D5a, D5d, die sonst nicht über die CAN-Schnittstelle 10 übertragen werden können, kann es sich beispielsweise um die Anhänger-Zusatz-Informationen IE1 sowie die Zugfahrzeug-Zusatz-Informationen IE5a handeln, d.h. beispielsweise eine Anhänger-Gefahren-Warnung W1, eine Zugfahrzeug-Gefahren-Warnung W5a, eine Anhänger-Beladungs-Information IL1, eine Zugfahrzeug-Beladungs-Information IL5a, einen Anhänger-Beladungs-Zustand ZL1, einen Zugfahrzeug-Beladungs-Zustand ZL5a oder Umgebungs-Signale S1, S5a eines Umgebungserfassungssystems 8, beispielsweise einer Kamera 8a, am mindestens einen Anhänger 1, 5d und/oder am mindestens einen Zugfahrzeug 5a. Analoge Informationen können auch vom Zusatz-Anhänger 5d bereitgestellt werden.

Über die drahtlose V2X-Datenverbindung 3 können also ausgetauschte Daten D1, D5a, D5d aber auch die Bewegungs-Informationen IB1, IB5a herangezogen werden, insbesondere auch eine Zugfahrzeug-Soll-Beschleunigung aSoll5a oder eine Zugfahrzeug-Soll-Geschwindigkeit vSoll5a, aus denen im Anhänger 1 über das Anhänger-Kommunikationsmodul 2 eigenständig auf eine (Not-) Bremsung des Zugfahrzeuges 5a geschlossen und entsprechend reagiert werden kann. Wird dies festgestellt, kann vom Anhänger-Kommunikationsmodul 2 eigenständig eine Bremsung des Anhängers 1 veranlasst werden, noch bevor ein pneumatischer Steuerdruck vom Zugfahrzeug 5a über den Kupplungskopf (gelb) pneumatisch im Anhänger 1 wirkt. Damit kann eine Bremsung des Anhängers 1 schneller erfolgen, so dass ein Aufschieben des Anhängers 1 auf das Zugfahrzeug 5a in derartigen Bremssituationen vermieden werden kann. Dies gilt analog auch für jeden Zusatz-Anhänger 5d, der mit einem solchen intelligenten Anhänger-Kommunikationsmodul 2 in einem Schnittstellenmodus SM betrieben werden kann.

Weiterhin kann ein Überprüfungsschritt ST2b vorgesehen sein, bei dem insbesondere im Schnittstellenmodus SM von dem Anhänger-Kommunikationsmodul 2 und/oder dem Teilnehmer-Kommunikationsmodul 4 geprüft wird, ob die CAN-Schnittstelle 10 zwischen dem mindestens einen Zugfahrzeug 5a und dem Anhänger 1 und/oder dem mindestens einen Zusatz-Anhänger 5d und dem Anhänger 1 ausgefallen ist. Wird ein CAN-Ausfall CA der CAN-Schnittstelle erkannt, werden auch diejenigen Anhänger-Daten D1 und/oder Zugfahrzeug-Daten D5a und/oder Zusatz-Anhänger-Daten D5d über die drahtlose V2X-Datenverbindung 3 übertragen, die ohne einen CAN-Ausfall CA über die CAN-Schnittstelle 10 übertragen werden. Damit kann eine redundante Datenübertragung bereitgestellt werden, die vom Anhänger-Kommunikationsmodul 2 und/oder vom Teilnehmer-Kommunikationsmodul 4 überwacht werden.

Im Überprüfungsschritt ST2b kann nach dem Aktivieren des Schnittstellenmodus SM und/oder des Kopplungsmodus KM zudem von dem Anhänger-Kommunikationsmodul 2 ständig oder in Intervallen geprüft werden, ob das Teilnehmer-Kommunikationsmodul 4 im Zugfahrzeug 5a und/oder im Zusatz-Anhänger 5d ausgefallen ist. Wird ein Modul-Ausfall MA des jeweiligen Teilnehmer-Kommunikationsmoduls 4 erkannt, kann das Anhänger-Kommunikationsmodul 2 ein Ausfall-Warnsignal WS über die drahtlose V2X-Datenverbindung 3 ausgeben und/oder die ausgegebenen Anhänger-Daten D1 derartig auswählen, dass durch den Modul-Ausfall MA wegfallende Zugfahrzeug-Daten D5a und/oder Zusatz-Anhänger-Daten D5d ersetzt werden. Auch dadurch kann bei gleichbleibender Informationsdichte eine Redundanz bereitgestellt werden.

Wird von dem Anhänger-Kommunikationsmodul 2 im ErkennungsSchritt ST2a plausibel erkannt, dass der Anhänger 1 an kein Zugfahrzeug 5a und/oder keinen Zusatz-Anhänger 5d angekoppelt ist oder kann nicht plausibel festgestellt werden, dass der Anhänger 1 an ein Zugfahrzeug 5a und/oder einen Zusatz-Anhänger 5d angekoppelt ist, wird das Anhänger-Kommunikationsmodul 2 in einen Freimodus FM (Betriebsmodus BM) geschaltet. In diesem kann das Anhänger-Kommunikationsmodul 2 Anhänger-Daten D1 eigenständig senden und/oder Teilnehmer-Daten D5 empfangen.

Ergänzend kann das Anhänger-Kommunikationsmodul 2 in allen Betriebsmodi BM in einem Anfragemodus AM (Betriebsmodus BM) betrieben werden, wobei dies anhand der in dem dritten Schritt ST3 erhaltenen Teilnehmer-Daten D5 erfolgt. In diesem Anfragemodus AM können aus den über die drahtlose V2X-Datenverbindung 3 übertragenen Teilnehmer-Daten D5 auch Anfrage-Signale SA verarbeitet werden. Die Anfrage-Signale SA können per Service Announcement (standardisiert) oder proprietär von externen Verkehrsteilnehmern 5, beispielsweise an einem Straßenrand 11 oder auf Betriebshöfen 12, ausgesendet werden. Mit Hilfe dieser Anfrage-Signale SA können die jeweiligen Verkehrsteilnehmer 5 beispielsweise die globale Anhänger-Position P1 oder die Anhänger-Beladungs-Information IL1 oder den Anhänger-Beladungs-Zustand ZL1 anfragen, woraufhin das Anhänger-Kommunikationsmodul 2 im Anhänger 1 eigenständig und automatisiert oder auf eine Freigabe des Fahrers hin antworten kann, sofern dem jeweiligen Anfrage-Signal SA vertraut wird.

Ebenso kann das Anhänger-Kommunikationsmodul 2 Teilnehmer-Bewegungs-Informationen IB5 und/oder Teilnehmer-Zusatz-Informationen IE5 von anderen Verkehrsteilnehmern 5, beispielsweise vom Zugfahrzeug 5a, über ein Anfrage-Signal SA anfragen und diese Teilnehmer-Daten D5 selbst verarbeiten und/oder kontinuierlich über die drahtlose V2X-Datenverbindung 3 verbreiten und damit ggf. auch als Knotenpunkt fungieren.

Zur optimierten Integration in den Anhänger 1 kann das Anhänger-Kommunikationsmodul 2 mit dem elektronischen Anhänger-Bremssystem 13 (TEBS, Electronic Braking System for Trailers) gekoppelt sein, beispielsweise über den CAN-Bus 7a. Grundsätzlich ist aber auch eine eigenständige Lösung denkbar, beispielsweise bei Anhängern 1 ohne TEBS.

Vorzugsweise kann weiterhin vorgesehen sein, dass die Daten D1, D15, D5, D5a, D5d, die an einen bestimmten Verkehrsteilnehmer 5 oder den Anhänger 1 gerichtet sind, signiert und/oder verschlüsselt über die drahtlose V2X-Datenverbindung 3 übertragen werden, um die Datensicherheit zu erhöhen. Die jeweiligen Kommunikationsmodule 2, 4 sind demnach auch ausgebildet, die Daten D1, D15, D5, D5a, D5d zu verschlüsseln und zu entschlüsseln.

Weiterhin können ermittelte und/oder empfangene Daten D1, D15, D5, D5a, D5d in dem Anhänger-Kommunikationsmodul 2 gespeichert und erst dann versendet werden, wenn ein sich zuvor registrierter Verkehrsteilnehmer 5 in einer Verbindung-Reichweite R der drahtlosen Direkt-Verbindung 3a befindet. Andererseits können die gespeicherten Daten D1, D15, D5, D5a, D5d auch zu einem bestimmten Zeitpunkt t gesendet bzw. angefordert werden.

### Bezugszeichenliste (Teil der Beschreibung)

- 1: Anhänger
- 2: Anhänger-Kommunikationsmodul
- 2a: Algorithmus
- 3: drahtlose V2X-Datenverbindung
- 3a: Direkt-Datenverbindung
- 3b: DSRC-Datenverbindung
- 3c: 5G-Direkt-Verbindung
- 3d: 5G-Mobil-Verbindung
- 3e: Verteilerstation
- 4: Teilnehmer-Kommunikationsmodul
- 5: Verkehrsteilnehmer
- 5a: Zugfahrzeug
- 5b: Infrastruktureinrichtung
- 5c: Fremdfahrzeug
- 5d: Zusatz-Anhänger
- 6: Sensorik
- 6a: GNSS-Sensor
- 6b: Raddrehzahlsensor
- 6c: Beschleunigungssensor
- 6d: Geschwindigkeitssensor
- 6e: Temperatur-Sensor
- 6f: Laderaumkamera
- 7: Bussystem
- 7a: CAN-Bus
- 8: Umgebungserfassungssystem
- 8a: Umgebungskamera
- 8b: Radarsensor 8b
- 8c: LIDAR-Sensor
- 8d: Ultraschall-Sensor
- 9: Energiequelle
- 9a: Batterie
- 10: CAN-Schnittstelle
- 11: Straßenrand
- 12: Betriebshof
- 13: elektronisches Anhänger-Bremssystem (TEBS)
- 100: Fahrzeug-Gespann

- alst1: Anhänger-Ist-Beschleunigung
- alst5: Teilnehmer-Ist-Beschleunigung
- AM: Anfragemodus
- BM: Betriebsmodus
- aSoll1: Anhänger-Soll-Beschleunigung
- aSoll5: Teilnehmer-Soll-Beschleunigung
- aSoll5a: Zugfahrzeug-Soll-Beschleunigung
- CA: CAN-Ausfall
- D1: Anhänger-Daten
- D15: Kopplungs-Daten
- D5: Teilnehmer-Daten
- D5a: Zugfahrzeug-Daten
- D5d: Zusatz-Anhänger-Daten
- dt: Zeitraum
- F1: Anhänger-Fahrtrichtung
- F5: Teilnehmer-Fahrtrichtung
- IB1: Anhänger-Bewegungs-Informationen
- IB5: Teilnehmer-Bewegungs-Informationen
- IB5a: Zugfahrzeug-Bewegungs-Informationen
- IE1: Anhänger-Zusatz-Informationen
- IE5: Teilnehmer-Zusatz-Information
- IE5a: Zugfahrzeug-Zusatz-Information
- IL1: Anhänger-Beladungs-Information
- IL5: Teilnehmer-Beladungs-Information
- IL5a: Zugfahrzeug-Beladungs-Information
- KM: Kopplungsmodus
- KB: Kopplungs-Botschaft
- MA: Modul-Ausfall
- P1: globale Anhänger-Position
- P5: globale Teilnehmer-Position
- P5a: globale Zugfahrzeug-Position
- R: Verbindungs-Reichweite
- S1: Anhänger-Umgebungs-Signal
- S5: Teilnehmer-Umgebungs-Signal
- S5a: Zugfahrzeug-Umgebungs-Signal
- SA: Anfrage-Signal
- SM: Schnittstellenmodus
- t: Zeitpunkt
- tL: Latenzzeit
- U: Fahrzeugumgebung
- V2XS: V2X-Standard
- V2XP1: V2X-Primärdatenpaket
- V2XP2: V2X-Sekundärdatenpaket
- vlst1: Anhänger-Ist-Geschwindigkeit
- vlst5: Teilnehmer-Ist-Geschwindigkeit
- vSoll1: Anhänger-Soll-Geschwindigkeit
- vSoll5: Teilnehmer-Soll-Geschwindigkeit
- vSoll5a: Zugfahrzeug-Soll-Geschwindigkeit
- W1: Anhänger-Gefahren-Warnung
- W5: Teilnehmer-Gefahren-Warnung
- W5a: Zugfahrzeug-Gefahren-Warnung
- WS: Ausfall-Warnsignal
- ZL1: Anhänger-Beladungs-Zustand
- ZL5: Teilnehmer-Beladungs-Zustand
- ZL5a: Zugfahrzeug-Beladungs-Zustand

## Patentansprüche

1. Verfahren zum Übertragen von Daten (D1, D5) zwischen einem Anhänger (1) und einem Verkehrsteilnehmer (5) in einer Fahrzeugumgebung (U), wobei die Daten (D1, D5) über eine drahtlose V2X-Datenverbindung (3) zwischen einem Anhänger-Kommunikationsmodul (2) des Anhängers (1) und einem Teilnehmer-Kommunikationsmodul (4) des Verkehrsteilnehmers (5) gemäß einem V2X-Standard (V2XS) latenzarm übertragen werden,
wobei die drahtlose Datenverbindung (3) direkt zwischen dem Anhänger-Kommunikationsmodul (2) und dem jeweiligen Teilnehmer-Kommunikationsmodul (4) ausgebildet wird oder indirekt über eine Verteilerstation (3a), wobei die Verteilerstation (3a) die übertragenen Daten (D1, D5) unmittelbar weiterleitet,
wobei das Anhänger-Kommunikationsmodul (2) abhängig vom jeweiligen Verkehrsteilnehmer (5) eigenständig einen Betriebsmodus (BM) auswählt und aktiviert, wobei in Abhängigkeit des aktivierten Betriebsmodus (BM)
- den Anhänger (1) betreffende Anhänger-Daten (D1) ausgewählt (ST1) und gemäß dem V2X-Standard (V2XS) über die drahtlose V2X-Datenverbindung (3) eigenständig ausgesendet werden (ST2), und/oder
- von Verkehrsteilnehmern (5) bereitgestellte und die Verkehrsteilnehmer (5) betreffende Teilnehmer-Daten (D5) gemäß dem V2X-Standard (V2XS) empfangen und eigenständig verarbeitet werden (ST3), **dadurch gekennzeichnet, dass** das Anhänger-Kommunikationsmodul (2) in einem Kopplungsmodus (KM) betrieben wird, wenn das Anhänger-Kommunikationsmodul (2) anhand von von einem Zugfahrzeug über die drahtlose V2X-Datenverbindung ausgegebenen Zugfahrzeug-Daten (D5a) plausibel feststellt, dass der Anhänger (1) mit mindestens einem dem Anhänger (1) zugeordneten Zugfahrzeug (5a) gekoppelt ist,
und/oder anhand von von einem Zusatz-Anhänger über die drahtlose V2X-Datenverbindung ausgegebenen Zusatz-Anhänger-Daten (D5d) plausibel feststellt, dass der Anhänger mit mindestens einem dem Anhänger (1) zugeordneten Zusatz-Anhänger (5d) gekoppelt ist (St2a), wobei das Anhänger-Kommunikationsmodul (2) in dem Kopplungsmodus (KM) die Anhänger-Daten (D1) eigenständig auswählt und/oder anpasst und in die Fahrzeugumgebung (U) zum Empfang durch andere Verkehrsteilnehmer (5) ausgibt, wobei dazu auszugebende Anhänger-Daten (D1) mit den Zugfahrzeug-Daten (D5a) und/oder den Zusatz-Anhänger-Daten (D5d) abgeglichen und/oder plausibilisiert werden und widersprüchliche Anhänger-Daten (D1) nicht übertragen werden .

2. Verfahren nach Anspruch 1, **dadurch gekennzeichnet, dass** als drahtlose V2X-Datenverbindung (3)
- eine Direkt-Datenverbindung (3a), die direkt zwischen dem Anhänger 1 und einem der Verkehrsteilnehmer (5) ausgebildet ist, verwendet wird, wobei die Direkt-Datenverbindung (3a) eine kurzreichweitige DSRC-Datenverbindung (3b) oder eine 5G-Direkt-Verbindung (3c) ist, und/oder
- eine 5G-Mobil-Verbindung (3d), die über eine Verteilerstation (3e) indirekt zwischen dem Anhänger (1) und einem der Verkehrsteilnehmer (5) ausgebildet wird, verwendet wird.

3. Verfahren nach Anspruch 2, **dadurch gekennzeichnet, dass** die Direkt-Datenverbindung (3a) in einem Frequenzband zwischen 5.850 und 5.925 GHz liegt und eine Verbindungs-Reichweite (R) von bis zu 1000m aufweist.

4. Verfahren nach einem der vorherigen Ansprüche, **dadurch gekennzeichnet, dass** eine V2X-Datenverbindung (3) mit einer Latenzzeit (tL) von weniger als 200ms, vorzugsweise weniger als 100ms, insbesondere weniger als 50ms ausgebildet wird.

5. Verfahren nach einem der vorherigen Ansprüche, **dadurch gekennzeichnet, dass** die Anhänger-Daten (D1) und die Teilnehmer-Daten (D5) in jeweils zugeordneten V2X-Datenpaketen (V2XP1, V2XP2) gemäß dem V2X-Standard (V2X) über die drahtlose Datenübertragung (3) übertragen werden.

6. Verfahren nach einem der vorhergehenden Ansprüche, **dadurch gekennzeichnet, dass** die eigenständig ausgesendeten Anhänger-Daten (D1) in Abhängigkeit des die Anhänger-Daten (D1) empfangenden Verkehrsteilnehmers (5) ausgewählt werden und/oder die eigenständig ausgesendeten Anhänger-Daten (D1) unabhängig von einer externen Software ausgewählt werden.

7. Verfahren nach einem der vorhergehenden Ansprüche, **dadurch gekennzeichnet, dass** das Anhänger-Kommunikationsmodul (2) die von Verkehrsteilnehmern (5) empfangenen und die Verkehrsteilnehmer (5) betreffenden Teilnehmer-Daten (D5) über die drahtlose V2X-Datenverbindung (3) eigenständig wieder ausgibt.

8. Verfahren nach einem der vorhergehenden Ansprüche, **dadurch gekennzeichnet, dass** das Anhänger-Kommunikationsmodul (2) in einem Freimodus (FM) betrieben wird, wenn das Anhänger-Kommunikationsmodul (2)
- plausibel feststellt, dass der Anhänger (1) mit keinem Zugfahrzeug (5a) und/oder mit keinem Zusatz-Anhänger (5d) gekoppelt ist, und/oder
- nicht plausibel feststellen kann, ob der Anhänger (1) mit einem Zugfahrzeug (5a) und/oder einem Zusatz-Anhänger (5d) gekoppelt ist (St2a).

9. Verfahren nach einem der vorhergehenden Ansprüche, **dadurch gekennzeichnet, dass** das Anhänger-Kommunikationsmodul (2) den Kopplungsmodus (KM) aktiviert, wenn anhand der von dem Zugfahrzeug (5a) über die drahtlose V2X-Datenverbindung (3) ausgegebenen Zugfahrzeug-Daten (D5a), beispielsweise anhand einer globalen Zugfahrzeug-Position (P5a) und/oder anhand der von dem Zusatz-Anhänger (5d) über die drahtlose V2X-Datenverbindung (3) ausgegebenen Zusatz-Anhänger-Daten (D5d) und/oder anhand einer Kopplungs-Botschaft (KB), plausibel festgestellt wird, dass der Anhänger (1) an das mindestens eine Zugfahrzeug (5a) und/oder an den mindestens einen Zusatz-Anhänger (5d) gekoppelt ist.

10. Verfahren nach Anspruch 9, **dadurch gekennzeichnet, dass** das Anhänger-Kommunikationsmodul (2) in einem Schnittstellenmodus (SM) betrieben wird und, dass die Anhänger-Daten (D1) und/oder die Zugfahrzeug-Daten (D5a) und/oder die Zusatz-Anhänger-Daten (D5d) in dem Schnittstellenmodus (SM) zwischen
- dem Anhänger (1) und dem mindestens einen Zugfahrzeug (5a) und/oder
- zwischen dem Anhänger (1) und dem mindestens einen Zusatz-Anhänger (5d)
über die drahtlose V2X-Datenverbindung (3) ausgetauscht werden.

11. Verfahren nach Anspruch 10, **dadurch gekennzeichnet, dass** im Schnittstellenmodus (SM) lediglich diejenigen Anhänger-Daten (D1) und/oder Zugfahrzeug-Daten (5a) und/oder Zusatz-Anhänger-Daten (D5d) über die drahtlose V2X-Datenverbindung (3) übertragen werden, die über eine standardisierte CAN-Schnittstelle (10) zwischen
- dem mindestens einen Zugfahrzeug (5a) und dem Anhänger (1) und/oder
- dem mindestens einen Zusatz-Anhänger (5d) und dem Anhänger (1) nicht übertragen werden können, beispielsweise eine Zugfahrzeug-Soll-Beschleunigung (aSoll5a) und/oder eine Zugfahrzeug-Soll-Geschwindigkeit (vSoll5a).

12. Verfahren nach Anspruch 10 oder 11, **dadurch gekennzeichnet, dass** das Anhänger-Kommunikationsmodul (2) und/oder das Teilnehmer-Kommunikationsmodul (4) in dem Schnittstellenmodus (SM) ermitteln, ob die CAN-Schnittstelle (10) zwischen
- dem mindestens einen Zugfahrzeug (5a) und dem Anhänger (1) und/oder
- dem mindestens einen Zusatz-Anhänger (5d) und dem Anhänger (1) ausgefallen ist,
wobei bei einem CAN-Ausfall (CA) der CAN-Schnittstelle (10) auch diejenigen Anhänger-Daten (D1) und/oder Zugfahrzeug-Daten (D5a) und/oder Zusatz-Anhänger-Daten (D5d) über die drahtlose V2X-Datenverbindung (3) übertragen werden, die ohne einen CAN-Ausfall (CA) über die CAN-Schnittstelle (10) übertragen werden.

13. Verfahren nach einem der Ansprüche 9 bis 12, **dadurch gekennzeichnet, dass** das Anhänger-Kommunikationsmodul (2) nach dem Aktivieren des Schnittstellenmodus (SM) und/oder des Kopplungsmodus (KM) prüft, ob das Teilnehmer-Kommunikationsmodul (4) im Zugfahrzeug (5a) und/oder im Zusatz-Anhänger (5d) ausgefallen ist,
wobei das Anhänger-Kommunikationsmodul (2) bei einem Modul-Ausfall (MA) des jeweiligen Teilnehmer-Kommunikationsmoduls (4) ein Ausfall-Warnsignal (WS) über die drahtlose V2X-Datenverbindung (3) ausgibt und/oder die ausgegebenen Anhänger-Daten (D1) derartig auswählt, dass durch den Modul-Ausfall (MA) wegfallende Zugfahrzeug-Daten (D5a) und/oder Zusatz-Anhänger-Daten (D5d) ersetzt werden.

14. Verfahren nach einem der vorhergehen Ansprüche, **dadurch gekennzeichnet, dass** das Anhänger-Kommunikationsmodul (2) in einem Anfragemodus (AM) betrieben wird, wobei das Anhänger-Kommunikationsmodul (2) in dem Anfragemodus (AM) Anfrage-Signale (SA) verarbeitet, wobei die Anfrage-Signale (SA) in den empfangenen Teilnehmerdaten (D5) von den jeweiligen Verkehrsteilnehmern (5) enthalten sind, und das Anhänger-Kommunikationsmodul (2) in Abhängigkeit der Anfrage-Signale (SA) Anhänger-Daten (D1) auswählt und aussendet.

15. Verfahren nach Anspruch 14, **dadurch gekennzeichnet, dass** das Anhänger-Kommunikationsmodul (2) lediglich dann Anhänger-Daten (D1) auswählt und aussendet, wenn dem das Anfrage-Signal (SA) aussendenden Verkehrsteilnehmer (5) vertraut wird.

16. Verfahren nach einem der vorhergehenden Ansprüche, **dadurch gekennzeichnet, dass** in den Anhänger-Daten (D1) im Anhänger (1) ermittelte Anhänger-Bewegungs-Informationen (IB1) und/oder Anhänger-Zusatz-Informationen (IE1) übertragen werden, wobei
- die Anhänger-Bewegungs-Informationen (IB1) eine globale Anhänger-Position (P1) und/oder eine Anhänger-Fahrtrichtung (F1) und/oder eine Anhänger-Ist-Beschleunigung (alst1) und/oder eine Anhänger-Soll-Beschleunigung (aSoll1) und/oder eine Anhänger-Ist-Geschwindigkeit (vIst1) und/oder eine Anhänger-Soll-Geschwindigkeit (vSoll1) enthalten, und
- die Anhänger-Zusatz-Informationen (IE1) eine Anhänger-Gefahren-Warnung (W1) und/oder eine Anhänger-Beladungs-Information (IL1) und/oder einen Anhänger-Beladungs-Zustand (ZL1) und/oder Anhänger-Umgebungs-Signale (S1) enthalten.

17. Verfahren nach einem der vorhergehenden Ansprüche, **dadurch gekennzeichnet, dass** in den Teilnehmer-Daten (D5) Teilnehmer-Bewegungs-Informationen (IB5) und/oder Teilnehmer-Zusatz-Informationen (IE5) übertragen werden, wobei die
- die Teilnehmer-Bewegungs-Informationen (IB5) eine globale Teilnehmer-Position (P5) und/oder eine Teilnehmer-Fahrtrichtung (F5) und/oder eine Teilnehmer-Ist-Beschleunigung (alst5) und/oder eine Teilnehmer-Soll-Beschleunigung (aSoll5) und/oder eine Teilnehmer-Ist-Geschwindigkeit (vlst5) und/oder eine Teilnehmer-Soll-Geschwindigkeit (vSoll5) enthalten, und
- die Teilnehmer-Zusatz-Informationen (IE5) eine Teilnehmer-Gefahren-Warnung (W5) und/oder eine Teilnehmer-Beladungs-Information (IL5) und/oder einen Teilnehmer-Beladungs-Zustand (ZL5) und/oder Teilnehmer-Umgebungs-Signale (S5) enthalten.

18. Verfahren nach Anspruch 16 oder 17, **dadurch gekennzeichnet, dass** die Bewegungs-Informationen (IB1, IB5) von einer Sensorik (6), beispielsweise einem GNSS-Sensor (6a) und/oder Raddrehzahlsensoren (6b) und/oder Beschleunigungssensoren (6c) und/oder Geschwindigkeitssensoren (6d) am Anhänger (1) und/oder an dem jeweiligen Verkehrsteilnehmer (5) ermittelt werden,
wobei die Bewegungs-Informationen (IB1, IB5) über ein Bussystem (7), beispielsweise einen CAN-Bus (7a), von der Sensorik (6) an das Anhänger-Kommunikationsmodul (2) übertragen werden, oder die Sensorik (6) zumindest teilweise im Anhänger-Kommunikationsmodul (2) angeordnet ist.

19. Verfahren nach einem der Ansprüche 16 bis 18, **dadurch gekennzeichnet, dass** der Beladungs-Zustand (ZL1, ZL5) über einen Temperatur-Sensor (6e) und/oder eine Laderaumkamera (6f) im Anhänger (5) oder im Verkehrsteilnehmer (5) erfasst wird.

20. Verfahren nach einem der vorhergehenden Ansprüche, **dadurch gekennzeichnet, dass** das Anhänger-Kommunikationsmodul (2) im Anhänger (2) unabhängig von den Verkehrsteilnehmern (5) mit Energie versorgt wird.

21. Verfahren nach einem der vorhergehenden Ansprüche, **dadurch gekennzeichnet, dass** die Anhänger-Daten (D1) und/oder Teilnehmer-Daten (D5) verschlüsselt über die drahtlose V2X-Datenverbindung (3) übertragen werden.

22. Verfahren nach einem der vorhergehenden Ansprüche, **dadurch gekennzeichnet, dass** das Anhänger-Kommunikationsmodul (2) die Anhänger-Daten (D1) erst dann aussendet, wenn ein Verkehrsteilnehmer (5) mit einem Teilnehmer-Kommunikationsmodul (4) in Verbindungs-Reichweite (R) zum Anhänger-Kommunikationsmodul (2) ist.

23. Anhänger-Kommunikationsmodul (2) zur Durchführung eines Verfahrens nach einem der vorhergehenden Ansprüche.

24. Anhänger (1) mit einem Anhänger-Kommunikationsmodul (2) nach Anspruch 23, wobei das Anhänger-Kommunikationsmodul (2) eigenständig oder Bestandteil eines elektronischen Anhänger-Bremssystems (13) ist.

## Claims

1. A method for transmitting data (D1, D5) between a trailer (1) and a road user (5) in a vehicle environment (U), the data (D1, D5) being transmitted with low latency via a wireless V2X data link (3) between a trailer communication module (2) of the trailer (1) and a user communication module (4) of the road user (5) in accordance with a V2X standard (V2XS), the wireless data link (3) being formed directly between the trailer communication module (2) and the particular user communication module (4) or indirectly via a distribution station (3a), the distribution station (3a) directly forwarding the transmitted data (D1, D5),
the trailer communication module (2) independently selecting and activating an operating mode (BM) depending on the particular road user (5), and, depending on the activated operating mode (BM),
- trailer data (D1) relating to the trailer (1) being selected (ST1) and independently sent (ST2) via the wireless V2X data link (3) in accordance with the V2X standard (V2XS), and/or
- user data (D5) provided by road users (5) and relating to the road users (5) being independently received and processed (ST3) in accordance with the V2X standard (V2XS), **characterized in that** the trailer communication module (2) is operated in a coupling mode (KM) when the trailer communication module (2) plausibly determines, on the basis of towing vehicle data (D5a) output by a towing vehicle via the wireless V2X data link, that the trailer (1) is coupled to at least one towing vehicle (5a) associated with the trailer (1),
and/or plausibly determines, on the basis of additional trailer data (D5d) output by an additional trailer via the wireless V2X data link, that the trailer is coupled (St2a) to at least one additional trailer (5d) associated with the trailer (1), the trailer communication module (2) independently selecting and/or adapting the trailer data (D1) in the coupling mode (KM) and outputting them to the vehicle environment (U) for reception by other road users (5), with trailer data (D1) to be output in this regard being compared and/or checked for plausibility with the towing vehicle data (D5a) and/or the additional trailer data (D5d), and contradictory trailer data (D1) not being transmitted.

2. The method according to claim 1, **characterized in that** the following are used as a wireless V2X data link (3):
- a direct data link (3a) which is formed directly between the trailer 1 and one of the road users (5), the direct data link (3a) being a short-range DSRC data link (3b) or a 5G direct link (3c), and/or
- a 5G mobile link (3d) which is indirectly formed between the trailer (1) and one of the road users (5) via a distribution station (3e).

3. The method according to claim 2, **characterized in that** the direct data link (3a) is in a frequency band between 5.850 and 5.925 GHz and has a connection range (R) of up to 1000 m.

4. The method according to any of the preceding claims,
**characterized in that** a V2X data link (3) is formed with a latency (tL) of less than 200 ms, preferably less than 100 ms, in particular less than 50 ms.

5. The method according to any of the preceding claims,
**characterized in that** the trailer data (D1) and the user data (D5) are transmitted in respectively assigned V2X data packets (V2XP1, V2XP2) via the wireless data transmission (3) in accordance with the V2X standard (V2X).

6. The method according to any of the preceding claims, **characterized in that** the independently sent trailer data (D1) are selected depending on the road user (5) receiving the trailer data (D1), and/or the independently sent trailer data (D1) are selected independently of external software.

7. The method according to any of the preceding claims,
**characterized in that** the trailer communication module (2) again independently outputs the user data (D5) received from road users (5) and relating to the road users (5) via the wireless V2X data link (3).

8. The method according to any of the preceding claims,
**characterized in that** the trailer communication module (2) is operated in a free mode (FM) when the trailer communication module (2):
- plausibly determines that the trailer (1) is not coupled to a towing vehicle (5a) and/or to an additional trailer (5d), and/or
- cannot plausibly determine whether the trailer (1) is coupled (St2a) to a towing vehicle (5a) and/or to an additional trailer (5d).

9. The method according to any of the preceding claims, **characterized in that** the trailer communication module (2) activates the coupling mode (KM) when, on the basis of the towing vehicle data (D5a) output by the towing vehicle (5a) via the wireless V2X data link (3), for example on the basis of a global towing vehicle position (P5a) and/or on the basis of the additional trailer data (D5d) output by the additional trailer (5d) via the wireless V2X data link (3) and/or on the basis of a coupling message (KB), it is plausibly determined that the trailer (1) is coupled to the at least one towing vehicle (5a) and/or to the at least one additional trailer (5d).

10. The method according to claim 9, **characterized in that** the trailer communication module (2) is operated in an interface mode (SM) and **in that** the trailer data (D1) and/or the towing vehicle data (D5a) and/or the additional trailer data (D5d) are exchanged in the interface mode (SM) between:
- the trailer (1) and the at least one towing vehicle (5a) and/or
- the trailer (1) and the at least one additional trailer (5d),
via the wireless V2X data link (3).

11. The method according to claim 10, **characterized in that,** in the interface mode (SM), only those trailer data (D1) and/or towing vehicle data (5a) and/or additional trailer data (D5d) are transmitted via the wireless V2X data link (3) which cannot be transmitted via a standardized CAN interface (10) between:
- the at least one towing vehicle (5a) and the trailer (1) and/or
- the at least one additional trailer (5d) and the trailer (1),
for example a towing vehicle target acceleration (aSoll5a) and/or a towing vehicle target speed (vSoll5a).

12. The method according to claim 10 or 11, **characterized in that** the trailer communication module (2) and/or the user communication module (4) determine, in the interface mode (SM), whether a failure has occurred in the CAN interface (10) between:
- the at least one towing vehicle (5a) and the trailer (1) and/or
- the at least one additional trailer (5d) and the trailer (1),
and, in the event of a CAN failure (CA) of the CAN interface (10), those trailer data (D1) and/or towing vehicle data (D5a) and/or additional trailer data (D5d) which are transmitted via the CAN interface (10) without a CAN failure (CA) are also transmitted via the wireless V2X data link (3).

13. The method according to any of claims 9 to 12, **characterized in that,** after activation of the interface mode (SM) and/or the coupling mode (KM), the trailer communication module (2) checks whether a failure has occurred in the user communication module (4) in the towing vehicle (5a) and/or in the additional trailer (5d),
and, in the event of a module failure (MA) of the particular user communication module (4), the trailer communication module (2) outputs a failure warning signal (WS) via the wireless V2X data link (3) and/or selects the output trailer data (D1) in such a way that towing vehicle data (D5a) and/or additional trailer data (D5d) omitted due to the module failure (MA) are replaced.

14. The method according to any of the preceding claims, **characterized in that** the trailer communication module (2) is operated in an inquiry mode (AM), the trailer communication module (2) processing inquiry signals (SA) in the inquiry mode (AM), the inquiry signals (SA) being contained in the received user data (D5) from the respective road users (5), and the trailer communication module (2) selecting and sending trailer data (D1) depending on the inquiry signals (SA).

15. The method according to claim 14, **characterized in that** the trailer communication module (2) only selects and sends trailer data (D1) when the road user (5) sending the inquiry signal (SA) is trusted.

16. The method according to any of the preceding claims,
**characterized in that** trailer movement information (IB1) and/or trailer additional information (IE1) determined in the trailer data (D1) in the trailer (1) is transmitted,
- the trailer movement information (IB1) containing a global trailer position (P1), and/or a trailer traveling direction (F1) and/or a trailer actual acceleration (alst1) and/or a trailer target acceleration (aSoll1) and/or a trailer actual speed (vlst1) and/or a trailer target speed (vSoll1), and
- the trailer additional information (IE1) containing a trailer hazard warning (W1) and/or trailer load information (IL1) and/or a trailer load state (ZL1) and/or trailer environment signals (S1).

17. The method according to any of the preceding claims,
**characterized in that** user movement information (IB5) and/or user additional information (IE5) are transmitted in the user data (D5),
- the user movement information (IB5) containing a global user position (P5) and/or a user direction of travel (F5) and/or a user actual acceleration (alst5) and/or a user target acceleration (aSoll5) and/or a user actual speed (vlst5) and/or a user target speed (vSoll5), and
- the user additional information (IE5) containing a user hazard warning (W5) and/or user load information (IL5) and/or a user load state (ZL5) and/or user environment signals (S5).

18. The method according to claim 16 or 17, **characterized in that** the movement information (IB1, IB5) is determined by a sensor system (6), for example a GNSS sensor (6a) and/or wheel speed sensors (6b) and/or acceleration sensors (6c) and/or speed sensors (6d) on the trailer (1) and/or on the particular road user (5),
the movement information (IB1, IB5) being transmitted via a bus system (7), for example a CAN bus (7a), from the sensor system (6) to the trailer communication module (2), or the sensor system (6) being arranged at least partially in the trailer communication module (2).

19. The method according to any of claims 16 to 18, **characterized in that** the load state (ZL1, ZL5) is detected via a temperature sensor (6e) and/or a cargo area camera (6f) in the trailer (5) or in the road user (5).

20. The method according to any of the preceding claims,
**characterized in that** the trailer communication module (2) in the trailer (2) is supplied with energy independently of the road users (5).

21. The method according to any of the preceding claims,
**characterized in that** the trailer data (D1) and/or user data (D5) are transmitted in encrypted form via the wireless V2X data link (3).

22. The method according to any of the preceding claims,
**characterized in that** the trailer communication module (2) sends the trailer data (D1) only when a road user (5) with a user communication module (4) is within connection range (R) of the trailer communication module (2).

23. A trailer communication module (2) for carrying out a method according to any of the preceding claims.

24. A trailer (1) having a trailer communication module (2) according to claim 23, wherein the trailer communication module (2) is independent or is a component of an electronic trailer brake system (13).

## Revendications

1. Procédé de transmission de données (D1, D5) entre une remorque (1) et un usager de la route (5) dans un environnement de véhicule (U), dans lequel les données (D1, D5) sont transmises à faible latence par l'intermédiaire d'une connexion de données sans fil V2X (3) entre un module de communication (2) de remorque de la remorque (1) et un module de communication (4) d'usager de l'usager de la route (5) selon une norme V2X (V2XS), dans lequel la connexion de données sans fil (3) est formée directement entre le module de communication (2) de remorque et le module de communication (4) d'usager respectif ou indirectement par l'intermédiaire d'une station de distribution (3a), dans lequel la station de distribution (3a) achemine immédiatement les données transmises (D1, D5),
dans lequel le module de communication (2) de remorque, en fonction de l'usager de la route (5) respectif, sélectionne et active de manière autonome un mode de fonctionnement (BM), dans lequel en fonction du mode de fonctionnement (BM) activé
- les données de remorque (D1) relatives à la remorque (1) sont sélectionnées (ST1) et envoyées de manière autonome (ST2) selon la norme V2X (V2XS) par l'intermédiaire de la connexion de données sans fil V2X (3) et/ou
- les données d'usager (D5) fournies par des usagers de la route (5) et relatives aux usagers de la route (5) sont reçues et traitées de manière autonome (ST3) selon la norme V2X (V2XS), **caractérisé en ce que** le module de communication (2) de remorque fonctionne dans un mode d'accouplement (KM) lorsque le module de communication (2) de remorque, à l'aide de données de véhicule de traction (D5a) émises par un véhicule de traction par le biais de la connexion de données sans fil V2X, constate de manière plausible que la remorque (1) est accouplée à au moins un véhicule de traction (5a) associé à la remorque (1),
et/ou à l'aide de données de remorque supplémentaire (D5d) émises par une remorque supplémentaire par l'intermédiaire de la connexion de données sans fil V2X, constate de manière plausible que la remorque est accouplée (St2a) à au moins une remorque supplémentaire (5d) associée à la remorque (1), dans lequel le module de communication (2) de remorque, dans le mode d'accouplement (KM), choisit et/ou adapte de manière autonome les données de remorque (D1) et les émet dans l'environnement de véhicule (II) pour réception par d'autres usagers de la route (5), dans lequel, dans ce but, les données de remorque (D1) à émettre avec les données de véhicule de traction (D5a) et/ou les données de remorque supplémentaire (D5d) sont comparées et/ou leur plausibilité est évaluée et les données de remorque (D1) contradictoires ne sont pas transmises.

2. Procédé selon la revendication 1, **caractérisé en ce que** en tant que connexion de données sans fil V2X (3)
- une connexion de données directe (3a), qui est formée directement entre la remorque 1 et l'un des usagers de la route (5), est utilisée, dans lequel la connexion de données directe (3a) est une connexion de données DSRC à courte portée (3b) ou une connexion directe 5G (3c), et/ou
- une connexion 5G mobile (3d), qui est formée par l'intermédiaire d'une station de distribution (3e) indirectement entre la remorque (1) et l'un des usagers de la route (5), est utilisée.

3. Procédé selon la revendication 2, **caractérisé en ce que** la connexion de données directe (3a) est située dans une bande de fréquences entre 5 850 et 5 925 GHz et présente une portée de connexion (R) allant jusqu'à 1 000 m.

4. Procédé selon l'une des revendications précédentes,
**caractérisé en ce qu'**une connexion de données V2X (3) est formée avec un temps de latence (tL) inférieur à 200 ms, de préférence inférieur à 100 ms, en particulier inférieur à 50 ms.

5. Procédé selon l'une des revendications précédentes,
**caractérisé en ce que** les données de remorque (D1) et les données d'usager (D5) sont transmises dans des paquets de données V2X (V2XP1, V2XP2) associés respectivement selon la norme V2X (V2X) par l'intermédiaire de la transmission de données sans fil (3).

6. Procédé selon l'une des revendications précédentes,
**caractérisé en ce que** les données de remorque (D1) envoyées de manière autonome sont choisies en fonction de l'usager de la route (5) recevant les données de remorque (D1) et/ou les données de remorque (D1) envoyées de manière autonome sont choisies indépendamment par un logiciel externe.

7. Procédé selon l'une des revendications précédentes,
**caractérisé en ce que** le module de communication (2) de remorque redistribue de manière autonome les données d'usager (D5) reçues par les usagers de la route (5) et relatives aux usagers (5) par l'intermédiaire de la connexion de données sans fil V2X (3).

8. Procédé selon l'une des revendications précédentes,
**caractérisé en ce que** le module de communication (2) de remorque fonctionne dans un mode libre (FM) lorsque le module de communication (2) de remorque
- constate de manière plausible que la remorque (1) n'est accouplée à aucun véhicule de traction (5a) et/ou à aucune remorque supplémentaire (5d), et/ou
- ne peut pas constater de manière plausible si la remorque (1) est accouplée (St2a) à un véhicule de traction (5a) et/ou à une remorque supplémentaire (5d).

9. Procédé selon l'une des revendications précédentes,
**caractérisé en ce que** le module de communication (2) de remorque active le mode d'accouplement (KM) si, à l'aide des données de véhicule de traction (D5a) émises par le véhicule de traction (5a) par l'intermédiaire de la connexion de données sans fil V2X (3), par exemple à l'aide d'une position de véhicule de traction globale (P5a) et/ou à l'aide des données de remorque supplémentaire (D5d) émises par la remorque supplémentaire (5d) par l'intermédiaire de la connexion de données sans fil V2X (3) et/ou à l'aide d'un message d'accouplement (KB), constate de manière plausible que la remorque (1) est accouplée à l'au moins un véhicule de traction (5a) et/ou à l'au moins une remorque supplémentaire (5d).

10. Procédé selon la revendication 9, **caractérisé en ce que** le module de communication (2) de remorque fonctionne dans un mode d'interface (SM) et que les données de remorque (D1) et/ou les données de véhicule de traction (D5a) et/ou les données de remorque supplémentaire (D5d) sont échangées dans le mode d'interface (SM) entre
- la remorque (1) et l'au moins un véhicule de traction (5a) et/ou
- entre la remorque (1) et l'au moins une remorque supplémentaire (5d) par l'intermédiaire de la connexion de données sans fil V2X (3).

11. Procédé selon la revendication 10, **caractérisé en ce que** dans le mode d'interface (SM), seules les données de remorque (D1) et/ou les données de véhicule de traction (5a) et/ou les données de remorque supplémentaire (D5d) sont transmises par l'intermédiaire de la connexion de données sans fil V2X (3), qui ne peuvent pas être transmises par l'intermédiaire d'une interface CAN standard (10) entre
- l'au moins un véhicule de traction (5a) et la remorque (1) et/ou
- l'au moins une remorque supplémentaire (5d) et la remorque (1), par exemple une accélération de consigne de véhicule de traction (aSoll5a) et/ou une vitesse de consigne de véhicule de traction (vSoll5a).

12. Procédé selon la revendication 10 ou 11, **caractérisé en ce que** le module de communication (2) de remorque et/ou le module de communication (4) d'usager déterminent, dans le mode d'interface (SM), si l'interface CAN (10) entre
- l'au moins un véhicule de traction (5a) et la remorque (1) et/ou
- l'au moins une remorque supplémentaire (5d) et la remorque (1) est tombée en panne,
dans lequel, lors d'une panne de CAN (CA) de l'interface CAN (10), les données de remorque (D1) et/ou les données de véhicule de traction (D5a) et/ou les données de remorque supplémentaire (D5d) sont également transmises par l'intermédiaire de la connexion de données sans fil V2X (3), qui sont transmises sans panne de CAN (CA) par l'intermédiaire de l'interface CAN (10).

13. Procédé selon l'une des revendications 9 à 12, **caractérisé en ce que** après l'activation du mode d'interface (SM) et/ou du mode d'accouplement (KM), le module de communication (2) de remorque vérifie si le module de communication (4) d'usager est tombé en panne dans le véhicule de traction (5a) et/ou dans la remorque supplémentaire (5d),
le module de communication (2) de remorque émet, lors d'une panne de module (MA) du module de communication (4) d'usager respectif, un signal d'alerte de panne (WS) par l'intermédiaire de la connexion de données sans fil V2X (3) et/ou sélectionne les données de remorque (D1) émises de telle sorte que les données de véhicule de traction (D5a) et/ou les données de remorque supplémentaires (D5d) supprimées par la panne de module (MA) soient remplacées.

14. Procédé selon l'une des revendications précédentes,
**caractérisé en ce que** le module de communication (2) de remorque fonctionne dans un mode de demande (AM), dans lequel le module de communication (2) de remorque traite des signaux de demande (SA) dans le mode de demande (AM), dans lequel les signaux de demande (SA) sont contenus dans les données d'usager (D5) reçues provenant des usagers de la route (5) respectifs et le module de communication (2) de remorque sélectionne et envoie des données de remorque (D1) en fonction des signaux de demande (SA).

15. Procédé selon la revendication 14, **caractérisé en ce que** le module de communication (2) de remorque sélectionne et envoie uniquement les données de remorque (D1), lorsque l'usager de la route (5) envoyant le signal de demande (SA) est de confiance.

16. Procédé selon l'une des revendications précédentes,
**caractérisé en ce que** dans les données de remorque (D1), des informations de mouvement de remorque (IB1) et/ou des informations supplémentaires de remorque (IE1) déterminées dans la remorque (1) sont transmises, dans lequel
- les informations de mouvement de remorque (IB1) contiennent une position de remorque globale (P1) et/ou une direction de déplacement de remorque (F1) et/ou une accélération réelle de remorque (alst1) et/ou une accélération de consigne de remorque (aSoll1) et/ou une vitesse réelle de remorque (vist1) et/ou une vitesse de consigne de remorque (vSoll1), et
- les informations supplémentaires de remorque (IE1) contiennent une alerte de danger pour la remorque (W1) et/ou une information de chargement de remorque (IL1) et/ou un état de chargement de remorque (ZL1) et/ou des signaux d'environnement de remorque (S1).

17. Procédé selon l'une des revendications précédentes,
**caractérisé en ce que** dans les données d'usager (D5), des informations de mouvement d'usager (IB5) et/ou des informations supplémentaires d'usager (IE5) sont transmises, dans lequel
- les informations de mouvement d'usager (IB5) contiennent une position d'usager globale (P5) et/ou une direction de déplacement d'usager (F5) et/ou une accélération réelle d'usager (alst5) et/ou une accélération de consigne d'usager (aSoll5) et/ou une vitesse réelle d'usager (vlst5) et/ou une vitesse de consigne d'usager (vSoll5), et
- les informations supplémentaires d'usager (IE5) contiennent une alerte de danger pour l'usager (W5) et/ou une information de chargement d'usager (IL5) et/ou un état de chargement d'usager (ZL5) et/ou des signaux d'environnement d'usager (S5).

18. Procédé selon la revendication 16 ou 17, **caractérisé en ce que** les informations de mouvement (IB1, IB5) sont déterminées par un dispositif de détection (6), par exemple, un capteur GNSS (6a) et/ou des capteurs de vitesse de roue (6b) et/ou des capteurs d'accélération (6c) et/ou des capteurs de vitesse (6d) sur la remorque (1) et/ou sur l'usager de la route (5) respectif,
dans lequel les informations de mouvement (IB1, IB5) sont transmises par l'intermédiaire d'un système de bus (7), par exemple un bus CAN (7a) par le dispositif de détection (6) au module de communication (2) de remorque ou le dispositif de détection (6) est au moins partiellement agencé dans le module de communication (2) de remorque.

19. Procédé selon l'une des revendications 16 à 18, **caractérisé en ce que** l'état de chargement (ZL1, ZL5) est détecté par l'intermédiaire d'un capteur de température (6e) et/ou d'une caméra d'espace de chargement (6f) dans la remorque (5) ou dans l'usager de la route (5).

20. Procédé selon l'une des revendications précédentes, **caractérisé en ce que** le module de communication (2) de remorque dans la remorque (2) est alimenté en énergie indépendamment par les usagers de la route (5).

21. Procédé selon l'une des revendications précédentes,
**caractérisé en ce que** les données de remorque (D1) et/ou les données d'usager (D5) sont transmises chiffrées par l'intermédiaire de la connexion de données sans fil V2X (3).

22. Procédé selon l'une des revendications précédentes,
**caractérisé en ce que** le module de communication (2) de remorque n'envoie les données de remorque (D1) qu'au moment où un usager de la route (5) avec un module de communication (4) d'usager se trouve dans une plage de connexion (R) avec le module de communication (2) de remorque.

23. Module de communication (2) de remorque pour mettre en oeuvre un procédé selon l'une des revendications précédentes.

24. Remorque (1) comportant un module de communication (2) de remorque selon la revendication 23, dans lequel le module de communication (2) de remorque est autonome ou composant d'un système de freinage électronique de remorque (13).
